(19) Europäisches Patentamt
European Patent Office
Office européen des brevets

(11) EP 2 096 152 A1

(12) EUROPEAN PATENT APPLICATION
published in accordance with Art. 153(4) EPC

(43) Date of publication:
**02.09.2009 Bulletin 2009/36**

(21) Application number: **07831068.7**

(22) Date of filing: **01.11.2007**

(51) Int Cl.:
***C09D 201/00*** (2006.01) ***C09B 67/10*** (2006.01)
***C09B 67/20*** (2006.01) ***C09B 67/46*** (2006.01)
***C09D 4/00*** (2006.01) ***C09D 5/02*** (2006.01)
***C09D 5/29*** (2006.01) ***C09D 7/12*** (2006.01)
***C09D 167/00*** (2006.01)

(86) International application number:
**PCT/JP2007/071334**

(87) International publication number:
**WO 2008/053966 (08.05.2008 Gazette 2008/19)**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **02.11.2006 JP 2006299042**

(71) Applicant: **FUJIFILM Corporation**
**Minato-ku**
**Tokyo 106-8620 (JP)**

(72) Inventors:
- **SATO, Tadahisa**
**Ashigarakami-gun, Kanagawa 258-8577 (JP)**
- **MAETA, Hideki**
**Minami-ashigara-shi**
**Kanagawa 250-0193 (JP)**
- **TANABE, Jun**
**Ashigarakami-gun, Kanagawa 258-8577 (JP)**
- **KYOTA, Hirokazu**
**Ashigarakami-gun, Kanagawa 258-8577 (JP)**

(74) Representative: **HOFFMANN EITLE**
**Patent- und Rechtsanwälte**
**Arabellastrasse 4**
**81925 München (DE)**

(54) **COATING COMPOSITION**

(57) A coating composition containing a build-up organic pigment fine-particle.

EP 2 096 152 A1

## Description

TECHNICAL FIELD

The present invention relates to a coating composition using a build-up organic pigment fine-particle as a colorant. Especially, the present invention relates to a coating composition strengthening denser particle feeling and metallic feeling, in addition, enabling to form a coated film of a metallic painted color having high color saturation and feeling of high color depth.

BACKGROUND ART

Paints to give metallic (brilliant) coated films have been used in coating in a volume of ratios for automobile exterior plates and parts thereof (e.g., side mirror, wheel cover, and front grille) and motorcycles, and also recently for OA devices such as personal computer and word processor, cell phones, and cabinets for home electric appliances and the like.
Such paint has been demanded to enable to form a metallic film with a high-class design feeling, and metallic basecoat paints containing a scale brilliant pigment (such as aluminum pigment or mica pigment) have been developed. The metallic coated film obtained by using the above paint appears brilliant by reflection of external incident light by the brilliant pigment contained in the coated film, and the coated films in various color tones provide characteristic decorative appearance rich in variety.
As a method of forming a metallic coated film, JP-B-2-38267 ("JP-B" means examined Japanese patent publication) discloses, for example, a metallic coating method of forming a metallic base film containing a relatively deep-colored pigment, and further forming thereon a colored clear coated film containing, at a low concentration, a high-chroma pigment similar in color to the relatively deep colored pigment. Further, there is a method of forming a metallic coated film, by sequentially applying a metallic base paint, a second base paint having transparency, and a clear paint (WO97/47396).
However, in the method described in JP-B-2-38267, there is a problem that the resultant metallic coated film is not satisfactory in color depth and high color saturation because the relatively deep colored pigment contained in the metallic base film deteriorates metallic appearance. Further, in the method described in WO97/47396, the color of the coated film varies largely, due to slight change in coated film thickness of the second base paint having transparency, making it difficult to control the painting line. Further, there is a problem that the method gives rise to a so-called framing phenomena which means an increase in film thickness and darkening of color in the edge regions in comparison to the general region.
In order to solve the problems, there is proposed a method of forming two layers of colored clear coated films having specific light transmittance on the metallic base coated film, preferably further specifying the color of the metallic base coated film enabling to obtain a metallic coated film superior in feeling of color depth and high color saturation (for example, see JP-A-2002-86057) ("JP-A" means unexamined Japanese Patent Publication). This technology also discloses a metallic coated film formation method with small variation in the painted color due to the variation of film thickness, and making it easy to control the painting line and consequently, without causing so-called framing phenomena. However, the painted color having further denser particle feeling and higher metallic feeling is demanded. With regard to the demand, the coated film provided in accordance with the conventional method was not satisfactory.
For the purpose of forming a designed coated film having dense metallic feeling gloss, a method of using a paint which contains vapor-deposited aluminum pieces is disclosed (JP-A-2003-82290). Further, there is also a method using a paint which contains specified amount of leafing type aluminum flake (JP-A-10-296177). However, in all these methods, metallic reflections from aluminum surface were not sufficient and there were problems that metallic painted colors having high color saturation and feeling of high color depth were hard to be obtainable in a coating specification providing colored clear coated film layer, resultantly remaining still insufficient.
With respect to the above problems, for example, the problem that it is hard to obtain a feeling of depth and high color saturation in the metallic coated film can be solved by employing a dye with high transparency as a colorant (material to be used in order to color a paint) is known. Such a problem is caused because the pigments, which have relatively dense color in the metallic base coated film or the colored clear coated film, reduces the metallic appearance. However, they are chelate dyes (metallized dyes) of heavy metal such as chromium that can be employed for the paint in a viewpoint of weather resistance. However, the metallized dyes are still inferior in weather resistance as compared with pigments, and because the heavy metal such as chromium is environmentally harmful, a development of novel colorant with a high transparency has been desired.
As mentioned above, all the paints that have been proposed for forming elaborately-designed metallic coated film until now are not sufficient yet, and development of new paint has been desired.

## DISCLOSURE OF INVENTION

The present invention contemplates providing a coating composition which enables to prepare metallic coated film having high color saturation and being excellent in color depth, metallic feeling, and weather resistance; and which does not contain heavy metals being environmentally harmful. Further, the present invention contemplates providing a paint realizing high brilliancy and highly excellent design in automobile exterior plates and parts thereof (e.g., side mirror, wheel cover, and front grille) and motorcycles, and also in OA devices such as personal computer and word processor, cell phones and cabinets for home electric appliances.

As a result of intensive researches and studies to solve the above problems in the conventional techniques, the inventors have found that a coating composition using a dispersion of highly transparent pigment fine-particles obtained from build-up organic pigment fine-particles as a colorant enables to solve the above problems. The present invention has been achieved on the basis of the above finding.

According to the present invention, there is provided the following means:

(1) A coating composition comprising a build-up organic pigment fine-particle;
(2) The coating composition described in the above item (1), wherein the build-up organic pigment fine-particle is a pigment fine-particle produced in accordance with a coprecipitation method;
(3) The coating composition described in the above item (2), wherein the coprecipitation method is carried out in a laminar flow passage;
(4) The coating composition described in the above item (2) or (3), wherein the coprecipitation method is a method utilizing a pH conversion;
(5) The coating composition described in any one of the above items (2) to (4), wherein the coprecipitation method is carried out by means of a microreactor device;
(6) The coating composition described in any one of the above items (1) to (5), wherein the average particle size of the build-up organic pigment fine-particles is 80 nm or less;
(7) The coating composition described in any one of the above items (1) to (6), wherein a ratio Mv/Mn of a volume average particle size (Mv) and a number average particle size (Mn) of the build-up organic pigment fine-particle is 1.80 or less;
(8) The coating composition described in any one of the above items (1) to (7), which is a thermosetting paint;
(9) The coating composition described in the above item (8), wherein the thermosetting paint contains an oligomer and/or a polyester resin, a crosslinking agent and a water-dispersible polymer particle;
(10) The coating composition described in any one of the above items (1) to (7), which is a photosetting paint;
(11) The coating composition described in the above item (10), wherein the photosetting paint contains a water-soluble polymerizable compound and a polymerizable surfactant;
(12) The coating composition described in any one of the above items (1) to (11), which is a metallic basecoat paint; and
(13) The coating composition described in any one of the above items (1) to (12), which is an aqueous basecoat paint.

Other and further features and advantages of the invention will appear more fully from the following description, appropriately referring to the accompanying drawings.

## BRIEF DESCRIPTION OF THE DRAWINGS

Fig. 1-1 is an explanatory view of one embodiment of a reactor, which has a Y-shaped channel on one side.
Fig. 1-2 is a sectional view taken on line I-I of Fig. 1-1.
Fig. 2 is an exploded perspective view showing an exploded state of one embodiment of a three-dimensional microreactor.

## BEST MODE FOR CARRYING OUT THE INVENTION

Generally, production methods for an organic pigment fine-particle are classified roughly into a break-down method to produce by crushing coarse particles and the like, and a build-up method to produce by particle growth in a vapor phase or a solution phase. The crushing method conventionally used frequently is a highly practical method for producing fine-particles. However, in order to produce particles with nanometer sizes (less than 80 nm) of organic pigment, there are various kinds of problems that productivity is extremely low and that the applicable pigments are limited and so on. The build-up method is a method of producing organic pigment fine-particles from an organic pigment

or an organic pigment precursor dissolved (molecular dispersion) in a solvent, via chemical reaction. This method has been attracting attention as a method which can produce an organic pigment fine-particle with nanometer sizes. It is difficult to produce such an organic pigment fine-particle by the break-down method. In the present invention, the pigment fine-particles prepared by the build-up method are referred to as "build-up organic pigment fine-particles".

As one of the organic pigment dispersion method proposed as the build-up process, there is a method to precipitate the fine-particles by allowing a solution prepared by dissolving (molecular dispersion) the organic pigment into a good solvent and a poor solvent (aqueous medium and the like) to slowly contact with each other. In this method, there is a method to produce stable fine-particles by allowing the dispersing agent to coexist in either of the solution or the poor solvent (JP-A-2003-026972, JP-A-2004-91560). This method is referred to as a coprecipitation method (in the case where the dispersing agent is not allowed to coexist, the method is generally referred to as a reprecipitation method). The coprecipitation method disclosed in JP-A-2003-026972 is a method of forming particles via a chemical reaction of the pH conversion, and it is a preferable method of forming stable fine-particles.

Recently, a method in which the coprecipitation method is carried out in a laminar flow passage was disclosed (JP-A-2005-307154, JP-A-2006-263538). "Laminar flow" is a term to express a mode of flow of a fluid, and will be explained in the following. When causing water to flow into a pipe, inserting a narrow pipe into the pipe along the central axis thereof and then injecting a colored solution into the water, the colored solution flows in the form of a single line while the flow velocity of the water is small or slow. Thus, the water flows straightly and parallel to the wall of the pipe. However, when the flow velocity is raised to reach a given flow velocity, turbulence is suddenly caused in the water flow. Consequently, the colored solution is mixed with the water flow so that the whole of the solution and water becomes a colored flow. The former flow is called laminar flow, and the latter flow is called turbulent flow.

Whether a flow turns to a laminar flow or turbulent flow depends on whether or not the Reynolds number, which is a dimensionless number showing the state of the flow, is not more than a given critical value. As the Reynolds number is smaller, a laminar flow is more apt to be caused. The Reynolds number Re of the flow in a pipe is represented by the following equation:

$$Re = D\langle v_x \rangle \rho / \mu$$

wherein D represents the equivalent diameter of the pipe, $\langle v_x \rangle$ represents the sectional average velocity, $\rho$ represents the density of the flow, and $\mu$ represents the viscosity of the flow. As can be understood from this equation, the Reynolds number is smaller as the equivalent diameter is smaller. Therefore, in the case that the equivalent diameter is in the order of μm, a stable laminar flow is apt to be formed. Further, the physical properties of the liquid, such as the density and the viscosity thereof, also have influence on the Reynolds number. As the density is smaller and/or the viscosity is larger, the Reynolds number is smaller. It can be, therefore, understood that a laminar flow is apt to be formed in that case. The critical value of Reynolds number when the flow changes is called a critical Reynolds number. The critical Reynolds number is not always constant but typically the following value.

| | |
|---|---|
| $Re < 2{,}300$ | Laminar flow; |
| $Re > 3{,}000$ | Turbulent flow; and |
| $3{,}000 \geq Re \geq 2{,}300$ | Transient state |

When a particle formation (nuclear formation→nuclear growth) and a particle stabilization are carried out under such a laminar flow, a production of pigment dispersion having small particle sizes, a narrow particle distribution and high transparency becomes possible with an enhanced productivity. Especially, the pigment dispersion produced in accordance with the pH conversion method in the laminar flow passage disclosed in JP-A-2005-307154 is particularly preferable, because such dispersion is superior in the particle size, the particle size distribution, the dispersion stability and the productivity.

The above patent document discloses that it is preferable to use a microreactor device as a reaction apparatus, when a production of pigment fine-particles is carried out under the laminar flow. It is especially preferable to use a microreactor device which adopts a method of combining the solution flows. This method is referred to as a central collision type. The device will be explained referring with the drawings. Fig. 2 is an exploded perspective view showing an example of a three-dimensional microreactor 80, under the condition that three parts constituting the microreactor 80 are decomposed. The three-dimensional microreactor 80 is mainly composed of a supply block 81, a combination block 82, and a reaction block 83, each having a cylindrical shape. For assembling the microreactor 80, the side faces of the blocks 81, 82, 83 having a cylindrical shape are attached to each other in this order to form a cylinder, and in this state, the respective blocks 81, 82, 83 are fastened integrally with bolts/nuts, etc.

On a side face 84 of the supply block 81 opposed to the combination block 82, two annular grooves 86, 85 are formed concentrically, and in the assembled state of the microreactor 80, two annular grooves 86, 85 form ring-shaped flow paths (channels) through which the solutions B and A flow respectively. Then, through-holes 88, 87 are respectively formed so as to reach the outside annular groove 86 and the inside annular groove 85 from a side face 94 of the supply block 81 not opposed to the combination block 82. Among two through-holes 88, 87, supply means (a pump, a connecting tube, etc.) for supplying the solution A is connected to the through-hole 88 communicated with the outside annular groove 86, and supply means (a pump, a connecting tube, etc.) for supplying the solution B is connected to the through-hole 87 communicated with the inside annular groove 85. In Fig. 2, although the solution A is allowed to flow through the outside annular groove 86, and the solution B is allowed to flow through the inside annular groove 85, they may be opposite.

At the center of a side face 89 of the combination block 82 opposed to the reaction block 83, a circular combination hole 90 is formed, and four long radial grooves 91, 91 ... and four short radial grooves 92, 92 ... are formed alternately in a radial manner from the combination hole 90. In the assembled state of the microreactor 80, the combination hole 90 and the radial grooves 91, 92 form a circular space to be a combination region 90 and radial flow paths through which the solutions A, B flow. Further, through-holes 95, 95 ... are respectively formed in a thickness direction of the combination block 82 from the tip ends of the long radial grooves 91 among eight radial grooves 91, 92, and these through-holes 95 are communicated with the above-mentioned outside annular groove 86 formed in the supply block 81. Similarly, through-holes 96, 96 ... are respectively formed in a thickness direction of the combination block 82 from the tip ends of the short radial grooves 92, and the through-holes 96 are communicated with the inside annular groove 85 formed in the supply block 81.

Further, at the center of the reaction block 83, one through-hole 93 communicated with the combination hole 90 is formed in a thickness direction of the reaction block 83, and the through-hole 93 becomes a micro-flow path.

Because of this, the solution A flows through a supply flow path composed of the through-hole of the supply block 81, the outside annular groove 86, the through-holes 95 of the combination block 82, and the long radial grooves 91, and divided into four divided flows to reach the combination region (combination hole 90). On the other hand, the solution B flows through a supply flow path composed of the through-hole 87 of the supply block 81, the inside annular groove 85, the through-holes 96 of the combination block 82, and the short radial grooves 92, and divided into four divided flows to reach the combination region (combination hole 90). In the combination region, the divided flow of the solution A and the divided flow of the solution B are combined with having the respective kinetic energies, and thereafter, the resultant combined flow flows in the micro-flow path with the flow direction changed by 90°. The combined flow will be collected as solution C after passing through the micro-flow path 93.

The organic pigment usable for the build-up organic pigment fine particles of the present invention is not limited in hue and structure thereof. Specifically, examples thereof include a perylene, perynone, quinacridone, quinacridonequinone, anthraquinone, anthanthrone, benzimidazolone, condensed disazo, disazo, azo, indanthrone, indanthrene, quinophthalone, quinoxalinedione, metallic complex azo, phthalocyanine, triaryl carbonium, dioxazine, aminoanthraquinone, diketopyrrolopyrrole, naphthole AS, thioindigo, isoindoline, isoindolinone, pyranthrone or isoviolanthrone-compound pigment, or a mixture thereof.

More specifically, examples of the organic pigment include perylene-compound pigments, such as C.I. Pigment Red 179, C.I. Pigment Red 190, C.I. Pigment Red 224, and C.I. Pigment Violet 29; perynone-compound pigments, such as C.I. Pigment Orange 43, and C.I. Pigment Red 194; quinacridone-compound pigments, such as C.I. Pigment Violet 19, C.I. Pigment Violet 42, C.I. Pigment Red 122, C.I. Pigment Red 192, C.I. Pigment Red 202, C.I. Pigment Red 207, and C.I. Pigment Red 209; quinacridonequinone-compound pigments, such as C.I. Pigment Red 206, C.I. Pigment Orange 48, and C.I. Pigment Orange 49; anthraquinone-compound pigments, such as C.I. Pigment Yellow 147; anthanthrone-compound pigments, such as C.I. Pigment Red 168; benzimidazolone-compound pigments, such as C.I. Pigment Brown 25, C.I. Pigment Violet 32, C.I. Pigment Yellow 180, C.I. Pigment Yellow 181, C.I. Pigment Orange 36, C.I. Pigment Orange 62, and C.I. Pigment Red 185; condensed disazo-compound pigments, such as C.I. Pigment Yellow 93, C.I. Pigment Yellow 94, C.I. Pigment Yellow 95, C.I. Pigment Yellow 128, C.I. Pigment Yellow 166, C.I. Pigment Orange 34, C.I. Pigment Orange 13, C.I. Pigment Orange 31, C.I. Pigment Red 144 (C.I. No. 20735), C.I. Pigment Red 166, C.I. Pigment Yellow 219, C.I. Pigment Red 220, C.I. Pigment Red 221, C.I. Pigment Red 242, C.I. Pigment Red 248, C.I. Pigment Red 262, and C.I. Pigment Brown 23; disazo-compound pigments, such as C.I. Pigment Yellow 13, C.I. Pigment Yellow 83, and C.I. Pigment Yellow 188; azo-compound pigments, such as C.I. Pigment Red 187, C.I. Pigment Red 170, C.I. Pigment Yellow 74, C.I. Pigment Red 48, C.I. Pigment Red 53, C.I. Pigment Orange 64, and C.I. Pigment Red 247; indanthrone-compound pigments, such as C.I. Pigment Blue 60; indanthrene-compound pigments, such as C.I. Pigment Blue 60; quinophthalone-compound pigments, such as C.I. Pigment Yellow 138; quinoxalinedione-compound pigments, such as C.I. Pigment Yellow 213; metallic complex azo-compound pigments, such as C.I. Pigment Yellow 129, and C.I. Pigment Yellow 150; phthalocyanine-compound pigments, such as C.I. Pigment Green 7, C.I. Pigment Green 36, C.I. Pigment Green 37, C.I. Pigment Blue 16, C.I. Pigment Blue 75, and C.I. Pigment Blue 15 (including 15:1, 15:6, others); triaryl carbonium-compound pigments, such as C.I. Pigment Blue 56, and C.I. Pigment Blue 61; dioxazine-compound pigments, such as C.I. Pigment Violet 23, and C.I. Pigment Violet 37; aminoanthraquinone-compound pigments, such as C.I. Pigment Red 177; diketopyrrolopyrrole-compound pigments, such as C.I. Pigment Red 254, C.I. Pigment Red 255, C.I. Pigment Red 264, C.I. Pigment Red 272, C.I. Pigment Orange 71, and C.I. Pigment Orange 73; naphthole AS-compound pigments, such as C.I. Pigment Red 187, and C.I. Pigment Red 170; thioindigo-compound pigments, such as C.I. Pigment Red 88; isoindoline-compound pigments, such as C.I. Pigment Yellow 139, C.I. Pigment Orange 66; isoindolinone-compound pigments, such as C.I. Pigment Yellow 109, C.I. Pigment Yellow 110, and C.I. Pigment Orange 61; pyranthrone-compound pigments, such as C.I. Pigment Orange 40, and C.I. Pigment Red 216; and isoviolanthrone-compound pigments, such as C.I. Pigment Violet 31.

Preferable organic pigments include anthraquinone, naphthol, perylene, quinacridone, diketopyrrolopyrrole, benzimidazolone, metallic complex azo, dioxazine, naphthrone, phthalocyanine, or indanethrene-compound pigments.

With respect to the build-up organic pigment fine particles to be used in the present invention, it is preferable that a polymer of a polymerizable compound is immobilized from the organic pigment fine particles. In the present invention, "immobile" means the state where the whole contained polymerizable compound (or a part thereof) is in contact with the organic pigment fine particles by homo-polymerizing alone (or in a copolymerized state). Then, the resultant polymer may be present on the surface of the organic pigment fine-particles or inside the organic pigment fine-particles, or it is sufficient that all of the polymer (or part of it) is in contact with the organic pigment fine-particles, and it is preferable that the polymer is adhered to the organic pigment fine-particles not so as to eliminate from them by immigration of the fine particles in the dispersion of the fine particles. Herein, the "polymer" means a compound generated by polymerization of two or more molecules of a polymerizable compound, and all polymerizable compounds on the fine particles may not be involved in the polymerization reaction, and there may be residual unreacted polymerizable compound.

Any of a water-soluble and a water-insoluble polymerizable compound can be used as a polymerizable compound, and the polymerizable compound is not particularly limited, as long as the polymerizable compound can be dispersed with an organic pigment, an ethylenically unsaturated monomer is preferable. Specific examples thereof which can be used include: (meth)acrylic acid esters such as methyl acrylate, ethyl acrylate, butyl acrylate, benzyl acrylate, 2-ethylhexyl acrylate, phenyl acrylate, cyclohexyl acrylate, methyl methacrylate, ethyl methacrylate, butyl methacrylate, hexyl methacrylate, 2-ethylhexyl methacrylate, octyl methacrylate, cyclohexyl methacrylate, β-hydroxyethyl acrylate, γ-aminopropyl acrylate, γ-hydroxypropyl acrylate, δ-hydroxybutyl acrylate, β-hydroxyethyl methacrylate, stearyl methacrylate, dimethylaminoethyl methacrylate, diethylene glycol methyl methacrylate, ethylene glycol ethyl dimethacrylate, tetraethylene glycol methyl dimethacrylate, and derivatives thereof; vinyl aromatic monomers such as styrene, o-methyl styrene, m-methyl styrene, p-methyl styrene, p-methoxy styrene, p-phenyl styrene, p-chlorostyrene, p-ethyl styrene, p-butyl styrene, p-t-butyl styrene, p-hexyl styrene, p-octyl styrene, p-nonyl styrene, p-decyl styrene, p-dodecyl styrene, 2,4-dimethyl styrene, 3,4-dichlorostyrene, α-methyl styrene, divinyl benzene, divinyl naphthalene, and derivatives thereof; vinyl esters such as vinyl acetate, vinyl propionate, vinyl benzoate, and derivatives thereof; and N-vinyl amides such as N-vinyl pyrrolidone; (meth)acrylic acid amides; alkyl-substituted (meth)acrylamides; methacryl amides; N-substituted maleimides; vinyl ethers such as vinyl methyl ether, vinyl ethyl ether, vinyl isobutyl ether, vinyl phenyl ether, divinyl ether, and derivatives thereof; olefins such as ethylene, propylene, isobutylene, 1-butene, 1-pentene, 4-methyl-1-penten, butadiene, isoprene, chloroprene, and derivatives thereof; diallyl phthalate; maleic anhydrides; (meth)acrylonitrile; methyl vinyl ketone; and vinylidene chloride.

Further, a water-soluble monomer having an anionic group such as a sulfonic group, a phosphoric group, or a carboxylic group is also used. An example thereof includes: a monomer having a carboxyl group such as acrylic acid, methacrylic acid, maleic acid, fumaric acid, itaconic acid, or p-vinyl benzoic acid; or an alkali metal salt, an alkaline earth metal salt, an ammonium salt, an amine salt or the like of the monomer. In addition, specific examples thereof include: styrene sulfonic acid, sodium styrene sulfonate, 2-acrylamide-2-methylpropane sulfonic acid, 2-hydroxy methyl methacryloyl phosphate, 2-hydroxy ethyl methacryloyl phosphate, and 3-chloro-2-hydroxy propyl methacryloyl phosphate. The monomers may be used alone or in combination.

A polymerizable compound whose molecules are separately provided with hydrophilic and hydrophobic functions is called a polymerizable surfactant, a reactive surfactant, or a reactive emulsifier, and can be preferably used in a method of producing an organic pigment dispersion of the present invention. Examples of such a polymerizable compound include those having α,β-ethylenically unsaturated group (e.g., a vinyl group, an allyl group, a propenyl group, (meth) acryloyl group), a group capable of dissociating an ion such as a sulfonic group, or a salt thereof, and a hydrophilic group such as an alkyleneoxy group. These are an anionic or nonionic surfactant that is generally used for emulsion polymerization, and has at least one unsaturated bond capable of effecting radical polymerization in a molecule.

In the production of the build-up organic pigment fine particle dispersion to be used in the present invention, the polymerizable surfactant may be used alone or together with a different kind of a surfactant, or may be used together with a polymerizable compound other than the polymerizable surfactant. Examples of preferable polymerizable surfactants include those which are commercially available from Kao Corporation, Sanyo Chemical Industries, Ltd., Daiichi Kogyo Seiyaku Co., Ltd., Asahi Denka Kogyo K.K., Nippon Nyukazai Co., Ltd., Nippon Oil and Fats Co., Ltd., and the like, and those described in "Leading-edge technology of Fine Particle/Powder, Ch. 1, Section 3: Fine particle Design

using Reaction Emulsifier, pp. 23-31", 2000 CMC.

In the production of the build-up organic pigment fine particle dispersion to be used in the present invention, a method of polymerizing a polymerizable compound used is not particularly limited, as long as it is a method whereby it is capable to polymerize a polymerizable compound in an organic pigment dispersion, and a method of polymerizing a polymerizable compound by generating a radical with a polymerization initiator is preferable. Although there are various factors for initiating polymerization, it is preferable to use heat, light, an ultrasonic wave, a microwave, or the like. As the polymerization initiator, a water-soluble or oil-soluble persulfate, peroxide, azo compound, or the like can be used. Specific examples thereof include ammonium persulfate, potassium persulfate, sodium persulfate, hydrogen peroxide, t-butylhydroperoxide, 2,2'-azobisisobutylonitrile, 2,2'-azobis(2-amidinopropane) dihydrochloride, 2,2'-azobis(2-N-benzylamidinopropane) dihydrochloride, and 2,2'-azobis[2-N-(2-hydroxyethyl)amidinopropane] dihydrochloride. For example, the homepage (www.wako-chem.co.jp) of Wako Pure Chemical Industries, Ltd. describes various kinds of water-soluble azo polymerization initiator, oil-soluble azo polymerization initiator, and polymer azo polymerization initiator together with 10-hour half-life temperatures and the structural formulae thereof, which are available. Although the addition amount of the polymerization initiator is not particularly limited, it is preferably 0.1 to 3% by weight, more preferably 1 to 20% by weight, and most preferably 2 to 10% by weight with respect to the entire monomer components.

In the production of the build-up organic pigment fine particle dispersion to be used in the present invention, a polymerizable compound and a monomer to be copolymerized therewith may be copolymerized under the condition that they are present in the dispersion. There is no particular limit to a timing at which a copolymerization monomer is included. However, it is preferable that at least one of the organic pigment solution and the aqueous medium contains at least one copolymerization monomer. There is no particular limit to the copolymerization monomer, as long as it does not hinder the precipitation of fine particles and the stabilization of the dispersion, and examples thereof include the above-mentioned polymerizable compound and the like.

In the production of the build-up organic pigment fine particle dispersion to be used in the present invention, various inorganic or organic functional additives may coexist in the dispersion, irrespective of whether they are copolymerized or not. There is no particular limit to a timing at which the functional additive is included. However, for example, it is preferable that the functional additive is added to at least one of the organic pigment solution and the aqueous medium. There is no particular limit to the functional additive, as long as it does not hinder the precipitation of fine particles and the stabilization of the dispersion, and examples thereof include a sequestering agent, a disinfectant, a fungicide, an aroma chemical, an ultraviolet absorber, an antioxidant, a surface tension regulator, a water-soluble resin, a pH adjuster, and urea.

In the production of the build-up organic pigment fine particle dispersion to be used in the present invention, an organic pigment is precipitated as fine particles, and a polymerizable compound in the dispersion is polymerized in this state, so that very high dispersion stability can be realized in the pigment dispersion. This function can be considered as follows. Since the polymerizable compound is present in the course of the precipitation for forming fine particles from a pigment compound in a dissolved state, the polymerizable compound adsorbs to the precipitated fine particles in an integrated manner, and the fine particles can be surrounded by the polymerizable compound efficiently without any gap. Therefore, the adsorption state of the polymerizable compound can be obtained, the state which cannot be realized merely by mixing the pigment fine particles with the polymerizable compound. By polymerizing the polymerizable compound in the environment of precipitation, the polymerizable compound can be polymerized exactly so as to surround the entire surfaces of the pigment fine particles densely, and the polymerizable compound can be immobilized preferably firmly and uniformly so as not to desorb from the pigment fine particles. Particularly, in the case where the polymerizable compound is a polymerizable surfactant, it can adsorb to the surfaces of the fine particles more strongly to surround them, so that its stabilization can be further enhanced. Thus, according to the present invention, owing to the use of the polymerizable compound, both the size control function at a time of build-up and the encapsulation function after the build-up can be exhibited. This enables the pigment fine particles finely dispersed to be encapsulated as they are, and high dispersion stability and storage stability can be provided to the pigment fine particles with a nanometer size and a uniform particle diameter.

The method where the polymerization process is carried out will be explained, particularly in a pH conversion coprecipitation method, in the production of the build-up organic pigment fine-particle dispersion used for the present invention. The timing and method of polymerizing the polymerizable compound are not particularly limited. For example, taking the following two steps as an example, the polymerization reaction may be conducted during the step (1) or after that, or during the step (2) or after that, or both in step (1) and step (2).

(1) Step for mixing a solution in which an organic pigment is dissolved with an aqueous medium.
(2) Step for concentrating and purifying the dispersion after the mixing of (1).

Similarly, regarding the polymerization initiator, the timing and method of adding it are not particularly limited. For example, taking the following four embodiments as an example, the polymerization initiator may be added in any of

the following aspects or in a combination thereof.

(1) The polymerization initiator is added to a solution in which an organic pigment is dissolved.
(2) The polymerization initiator is added to an aqueous medium.
(3) The polymerization initiator is added after mixing a solution in which an organic pigment is dissolved with an aqueous medium.
(4) The polymerization initiator is added after the dispersion that has been mixed is concentrated and purified.

In the production of the build-up organic pigment fine particle dispersion to be used in the present invention, the polymerizable compound is contained in at least one of the organic pigment solution and the aqueous medium, and is preferably contained in the organic pigment solution. In the case of using together with the other polymerizable compound and dispersant, its embodiment is not particularly limited. For example, they may be dissolved in the organic pigment solution and the aqueous medium, each of them, or may be added to the dispersion after mixing. Further, when fine particles are precipitated, solution other than the organic pigment solution or the aqueous medium may be mixed if required, and at least three solutions may be mixed concurrently or successively. The polymerization reaction temperature can be selected depending upon the kind of the polymerization initiator, and preferably 40°C to 100°C, more preferably 50°C to 90°C, and particularly preferably 50°C to 80°C. The polymerization reaction time may be 1 to 12 hours depending upon the polymerizable compound to be used, the concentration thereof, and the reaction temperature of the polymerization initiator.

Additives such as an ultraviolet absorber, an antioxidant, an aroma chemical, a fungicide, a surface tension regulator, a water-soluble resin, a disinfectant, a pH adjuster, and urea may be used together for the purpose of enhancing the solidity and the like of the build-up organic pigment fine particle. The addition timing and method of these additives are not particularly limited. Taking the following four embodiments as an example, they may be added in any of the following aspects or in a combination thereof.

(1) Additives are added to a solution in which an organic pigment is dissolved.
(2) Additives are added to an aqueous medium.
(3) Additives are added after mixing a solution in which an organic pigment is dissolved with an aqueous medium.
(4) Additives are added after a dispersion that has been mixed is concentrated and purified.

In order to adjust the polymerization degree (molecular weight), various kinds of chain transfer agents (e.g., catechols, alcohols, thiols, mercaptans) may be used.
The content of the polymerizable compound and/or the dispersant is preferably in the range of 0.1 to 1000 parts by mass, more preferably 1 to 500 parts by mass, and particularly preferably 10 to 250 parts by mass with respect to 100 parts by mass of the pigment so as to further enhance the homogeneous dispersibility and storage stability of the pigment. When the content is less than 0.1 parts by mass, the dispersion stability of the organic pigment fine particles may not be enhanced.

Next, an explanation will be described about the build-up organic pigment fine-particles used for the colorant for the coating composition of the present invention produced in accordance with the above mentioned method. With respect to the method of measuring a fine particle, there are some ways to express the average size in a group with numerical values, and those used frequently include mode diameter showing the maximum value of the distribution, median diameter equivalent to the median value in the integral frequency distribution curve, and various average diameters (length-average, area-average, mass- average, number-average (Mn), volume-average (Mv), etc.). The average particle size of the build-up organic pigment fine-particles used for the present invention is preferably from 3 to 80 nm in the volume-average (Mv), and particularly preferably from 5 to 70 nm.

Uniformity in particle size of fine particles, i.e., a monodisperse fine-particle system, means that the size of the particles contained is uniform, and in addition, there is no fluctuation in chemical composition and crystalline structure in an individual particle among the particles. Thus, the degree of uniformity or monodispersion is an important factor determining the properties of the particles. Especially when the particles are ultrafine particles having a particle size in nanometer order, it is a particularly-important factor governing the properties of the particles. The method of producing an organic pigment dispersion of the present invention enables not only to produce fine particles smaller in particle diameter but also to control and adjusting the size of the particles. As an indicator to evaluate size uniformity, there can be used a value (Mv/Mn) obtained by dividing a volume average particle diameter Mv by a number average particle diameter Mn may be expressed as an index of monodispersibility. In the present invention, unless otherwise particularly specified, the monodispersibility of the fine particles is represented as the value (Mv/Mn), and when this value is closer to 1, the monodispersibility is more excellent. In the organic pigment fine particles of the present invention, the value Mv/Mn is preferably 1.80 or less, more preferably 1.60 or less, and most preferably 1.40 or less. The volume average particle diameter Mv and the number average particle diameter Mn can be measured, for example, by a dynamic light

scattering method or the like.

Regarding the content of the build-up organic pigment fine-particles in the coating composition of the present invention, there is not any limitation in particular. It is preferable to be 50 parts by mass or less with respect to 100 parts by mass of the coating composition, and is more preferable to be in the range of 1 to 30 parts by mass.

An explanation about the case where the coating composition of the present invention is a thermosetting paint will be described below. The thermosetting paint is a paint where a chemical reaction is induced by thermal energy, and as a result, a coated film is formed. A thermosetting occurs due to a crosslink between resins contained in the paint, and it is classified into a method of using the principal resin together with cross-linker resin, and a method of self crosslinking. Using the build-up organic pigment fine-particles as the colorant in the thermosetting paint enables to form the coated film having superior brilliancy.

Recent examples of the method of using the principal resin together with cross-linker resin include a method to contain a water-dispersible polymer particles disclosed in JP-A-2006-131695 or JP-A-2006-176618. Inventors of the present invention found that a use of those resins and the build-up organic pigment as the colorant enables to obtain the coated film having an enhanced metallic appearance. Additionally, the former patent is characterized in containing oligomer and/or polyester resin and crosslinking agent in addition to the water-dispersible polymer particles and the pigments as the colorant. The latter patent is characterized in containing a crosslinking agent in addition to the water-dispersible (acrylic) polymer particles and the pigments. The former process is preferable regarding the build-up organic pigment fine-particles to be used in the present invention.

An explanation will be described below about the case where the thermosetting paint to be used in the present invention is a paint containing water-dispersible acrylic polymer particles and a crosslinking agent, and the water-dispersible acrylic polymer particles are synthesized by emulsification polymerization of a radical polymerizable unsaturated monomer in a multi-step reaction using a reactive emulsifying agent being an ammonium salt of a sulfonic acid compound. Regarding the radical polymerizable unsaturated monomer, it is preferable that the paint contains an amide group-containing radical polymerizable unsaturated monomer having two or more radical polymerizable unsaturated group in one molecule in an amount of 0.1 to 5.0% by weight with respect to the total amount of the radical polymerizable unsaturated monomers, and that the paint also contains methacrylic acid and a hydroxy group-containing radical polymerizable unsaturated monomer as its essential components. In this case, it is preferable that the water-dispersible acrylic polymer particles have a hydroxyl value in the range of 1 to 70 mgKOH/g, and an acid value in the range of 5 to 90 mgKOH/g.

An explanation will be described below about the case where the coating composition of the present invention is a photosetting paint. The photosetting paint is a paint where a chemical reaction (mainly, radical reaction) is induced by light energy (mainly, ultraviolet radiation), and as a result, a coated film is formed (see, for example, JP-A-05-76822). The photosetting paint is prepared by dissolving a photopolymerizable compound (monomer or/and oligomer of a relatively lower molecular weight) into a reactive diluent. A radical polymerization reaction is induced by the function of a photoinitiator blended into the paint by irradiating ultraviolet radiation, and a film becomes a cured coated film on the second time scale. It was found that a vivid and deep colored coated film was formed when the build-up pigment fine-particles are used in such paint.

The photopolymerizable compound employed for the photosetting paint to be used for the present invention is a compound having a radical polymerizable, ethylenically unsaturated bond. Any compound having at least one radical polymerizable, ethylenically unsaturated bond in its molecule may be suitable as the photopolymerizable compound. It includes those with chemical forms such as a monomer, an oligomer, a polymer and so on. Only a single radical polymerizable compound may be used, or, alternatively, two or more radical polymerizable compounds may be used together with an arbitrary ratio in order to improve the target performance.

Further, it is preferable that the compound having the radical polymerizable, ethylenically unsaturated bond is a compound having at least one carboxyl group at the same time in its one molecule, which will be shown below.

(1) Reaction product of dibasic acid anhydride and acrylic ester containing a hydroxy group or of dibasic acid anhydride and methacrylic ester containing a hydroxy group: Typical examples thereof include a reaction product of succinic anhydride, ortho phthalic anhydride, maleic anhydride and the like and 2-hydroxyethyl methacrylate, or 3-chloro-2-hydroxypropyl methacrylate.

(2) A compound obtained by allowing a secondary hydroxy group of acrylic ester of epoxy resin to react with dibasic acid anhydride: Typical examples thereof include a compound obtained by allowing the following epoxy resins to react with acrylic ester, followed by allowing the hydroxy group being remained or newly generated to react with succinic anhydride or maleic anhydride. Examples of the epoxy resins include Epicoat 828, Epicoat 1001 (Trade name; manufactured by Yuka Shell Epoxy Co., Ltd.) which are bisphenol type epoxy resins, Denacol (Trade name; manufactured by NAGASE & CO., LTD) which is a polyalcohol aliphatic epoxy resin, such as 1,4-butanedioldiglycidyl ether, trimethylolpropane diglycidyl ether, pentaerythrol glycidyl ether or CELLOXIDE (Trade name; manufactured by Daicel Chemical Industries, LTD.) which is a cycloaliphatic epoxy resin.

(3) A compound obtained by allowing polyalcohol ester of acrylic acid or methacrylic acid to react with dibasic

acid anhydride: Typical examples thereof include a compound obtained by allowing glycol or polyethylene glycol ester of acrylic acid to react with succinic anhydride or maleic anhydride. The molecular weight of the glycol or polyethylene glycol used above is preferably about 600 or smaller.

(4) Water-soluble urethane acrylate and methacrylate each having carboxyl group side-chain in its molecular chain: Although the synthesis of oligomer as an ultraviolet curing resin is publicly known, in order to synthesize the oligomer compound having carboxyl side-chain, a polybasic acid represented by trimellitic anhydride or a compound having two hydroxy groups and one carboxyl group in its one molecule represented by dimethylolpropionic acid and the like may be used during the oligomer synthesis reaction.

In addition, the above mentioned compounds (1) to (4) may be neutralized by base and becomes to be an easily water-soluble compound. Specific examples of the base to be used include ammonia, methylamine, ethylamine, dimethylamine, diethylamine, n-butyl amine, di-n-butyl amine, trimethylamine, ethylenediamine, diethylenetriamine, triethylenetetramine, tetraethylenepentamine, propylenediamine, ethanolamine, hexylamine, laurylamine, diethanolamine, triethanolamine, morpholine, piperidine, propylamine, isopropylamine, isobutyl amine, NaOH, LiOH, KOH, etc. For the purpose of endowing chemical resistance against an etchant to the ultraviolet curing compound, and of enabling to peel the ultraviolet curing compound apart from a substrate by strong alkali, preferred bases to be used are organic bases. Among the organic bases, especially preferred bases are highly volatile, and the bases with their own boiling point of 190°C or lower under an ordinary pressure are preferable.

Photoinitiators to be used for the composition of the present invention are compounds that initiate polymerization of the photopolymerizable composition by an irradiation of light. When the photopolymerizable composition is water-soluble, it is preferable that the photoinitiator exists in the same phase, and accordingly, it is preferable that the photoinitiator is water-soluble.

The coating composition of the present invention is useful as a metallic basecoat paint. The coated film, in many cases, has a structure being composed of an undercoat coated film that protects the substrate and gives it anticorrosion property; an overcoat coated film that gives colors, gloss, and texture satisfying tastes of the consumer; and an intermediate coated film between them. The coating composition of the present invention has, as in the paint for automobiles, a function improving the durability due to the protection of the automobile to be coated from the outside world including such as light, heat or water. In addition, in the case of the coated film to which the expected performance with respect to the beautiful appearance is enhanced, so-called 2 coat 1 bake is adopted in order to exhibit classy in appearance. The 2 coat 1 bake is made up of the overcoat coated film being composed of a basecoat which is a colored layer, and a clear coat which makes the surface smooth and gives gloss to it. The metallic basecoat paint is a paint to be used for exhibiting classy in appearance, by making the basecoat to contain luster materials such as aluminum pigments, mica pigments and the like.

It is known that the metallic appearance with the use of the luster materials brings superior brightness, glitters, flip tones and so on as the colorant contained in the basecoat is more transparent. However, it was difficult for the organic pigment produced in accordance with the conventional break-down method to ensure transparency sufficiently. In other words, it was difficult to reduce the particle size down to 100 nm or smaller, uniformly and with an efficient productivity. Accordingly, either chromium complex dyes (metallized dyes) with relatively better light fastness was used despite the environmental problem, or organic pigments with particle sizes of 100 nm level were used as the colorant by putting much weight on light fastness although being dissatisfied with metallic property. This problem can be solved by the coating composition containing the build-up organic pigment fine-particles of the present invention as the colorant.

A detailed explanation will be described below about the luster materials to be used for the metallic basecoat paint of the present invention. The luster materials may be also referred to as brilliant pigments, and examples include scale metal pigments such as aluminum, copper, nickel alloy, stainless, and so on; scale metal pigments whose surfaces are covered with metallic oxide; scale metal pigments whose surfaces are chemically adsorbed with coloring pigments; scale aluminum pigments on whose surface formed an aluminum oxide layer by causing oxidation-reduction reaction there; aluminum solid solution disc-shaped iron oxide pigments; glass flake pigments; glass flake pigments whose surfaces are covered with metallic oxide; glass flake pigments whose surfaces are chemically adsorbed with coloring pigments; interference mica pigments whose surfaces are covered with titanium dioxide; reduced mica pigments prepared by reducing interference mica pigments; colored mica pigments whose surfaces are chemically adsorbed with coloring pigments or whose surfaces are covered with iron oxide; graphite pigments whose surfaces are covered with titanium dioxide; silica flake pigments or alumina flake pigments whose surfaces are covered with titanium dioxide; disc-shaped iron oxide pigments, hologram pigments, synthetic mica pigments, cholesteric liquid crystal polymer pigments having helical structure; bismuth oxychloride pigments, etc. Among those, the scale metal pigments, the scale metal pigments whose surfaces are covered with metallic oxide; the scale metal pigments whose surfaces are chemically adsorbed with coloring pigments; and the colored mica pigments whose surfaces are covered with metal oxide are preferable, though not limited thereto. Various brilliant pigments may be appropriately employable depending on a required brilliance feeling. Only a single luster material may be used, or, alternatively, two or more luster materials may be used together. Regarding the sizes of those brilliant pigments, it is preferable to be from 1 to 30μm in the longitudinal direction, and to be from

0.001 to 1μm in the thickness direction. In other words, it is desirable from the viewpoint of orientation to use the luster materials with aspect ratio (average particle size / average thickness) of about 30 or larger.

The blending amount of the brilliant pigments is from 5 to 100 parts by weight with respect to resin solid content of 100 parts by weight among the brilliant paint. The blending amount is preferably from 10 to 50 parts by weight from the viewpoint of brilliance feeling of the coated film, and more preferably from 10 to 30 parts by weight.

With regard to the resin component to be blended into the metallic basecoat paint in the method of the present invention, thermosetting resin compositions and chlorinated polyolefin are preferable. Specific examples include those prepared by using basic substance resin such as acrylic resin, polyester resin, alkyd resin, urethane resin or so each having crosslinking functional group such as a hydroxy group, together with crosslinking agent such as melamine resin, urea-formaldehyde resin, polyisocyanate compounds (including block substance). Those examples can be used by dissolving or dispersing into an organic solvent and/or solvent such as water. Further, when the substrate is a resin, the following chlorinated polyolefin based on the polyolefin can be used together as the above-mentioned resin component of the polyolefin. That is to say, the polyolefin prepared by polymerizing one or more kinds selected from olefins having 2 to 10 carbon atoms such as ethylene, propylene, butylene, hexene and the like; or polyolefin prepared by copolymerization or graft polymerization modification in accordance with the known method in polymerizable, monomer such as unsaturated carboxylic acid such as (meth) acrylic acid, maleic acid, fumaric acid; alkyl ester of (meth)acrylic acid, styrene, acrylonitrile and the like.

The metallic basecoat paint in the method of the present invention contains the build-up organic pigments as the colorant, corresponding to the above definition. Only single metallic basecoat paint may be used, or, alternatively, two or more metallic basecoat paints may be used in combination. The metallic basecoat paint may be used by mixing with metal oxide pigments such as carbon black, titanium oxide, iron oxide; complex metal oxide pigments such as zinc white, molybdenum red, Prussian blue, cobalt blue, titanium yellow, and the like; or, for example, with dyes such as metal complex based dyes, azo dyes, anthraquinone dyes, indigoid dye, carbonium dyes, quinone imine dyes, phthalocyanine dye and so on.

The blending amount of the colorant is, from the viewpoint of coloring power or finished appearance of the resultant coated film, preferably 50 parts by weight or less, particularly preferably 1 to 30 parts by weight with respect to 100 parts by weight of the resin solid content among the metallic basecoat paint.

Further, solvents such as water or an organic solvent, various additives such as a rheology control agent, a pigment dispersing agent, a sedimentation-preventing agent, a curing catalyst, an antifoaming agent, an antioxidant, an ultraviolet absorber, an extender pigment and so on may be appropriately blended into the metallic basecoat paint according to need.

In the coating composition of the present invention, the metallic basecoat paint can be prepared by allowing the above-mentioned components to mix and disperse each other.

The metallic basecoat paint in the present invention can be applied in accordance with the method of electrostatic spray painting, air spray, air-less spray and so on. The film thickness of the metallic basecoat paint is preferably in the range of 0.5 to 30μm based on the cured coated film, from the viewpoint of smoothness of the coated film, and more preferably in the range of 5 to 25μm. Regarding the brilliant paint, when spray painting is carried out, it is preferable to usually adjust the solid content in the range of 15 to 50% by weight, and the viscosity at 20°C in the range of 10 to 18 seconds/Ford Cup No.4 on the occasion of painting. It is more preferable to adjust them in the range of 20 to 40% by weight and in the range of 11 to 15 seconds/Ford Cup No.4 respectively. The coated film in itself of the brilliant paint can be crosslinked and cured at the temperature of about 70°C to about 150°C usually.

Over the coated film where the metallic basecoat paint is applied and cured, a top clear paint can be applied for the purpose of improving weather resistance, chemical resistance, and water resistance, however, the top clear paint may be applied over the uncured coated film without thermosetting the metallic basecoat paint.

When the present invention is applied to the metallic basecoat paint, it is preferable that the paint contains a hydroxy group-containing resin whose hydroxyl value is 5 to 200 mgKOH/g, and whose acid value is 0 to 100 mgKOH/g, a curing agent, and 3 to 30 parts by weight of a colored aluminum pigments whose surfaces are covered with resin whose average particle size is smaller than 20μm, and 0.1 to 10 parts by weight of ultraviolet absorber with respect to 100 parts by weight of the total solid content of the hydroxy group-containing resin and the curing agent.

It is preferable that the above-mentioned metallic basecoat paint is an aqueous basecoat paint containing scale brilliant pigments. In the coating method, it is preferable to apply the aqueous base paint in the following procedures. First, the aqueous base paint prepared by adjusting the solid content to be 20 to 40% by weight in the paint is applied on an object to be painted to achieve a resultant dry film thickness of 1 to 15μm. Then, on the resultant uncured coated film, an aqueous basecoat paint prepared by adjusting the solid content in the paint to be 2 to 15% by weight is applied, to achieve a resultant dry film thickness of 0.1 to 5μm. After setting, the above-mentioned aqueous basecoat paint (having solid content of 2 to 15% by weight in the paint) is applied on the uncured coated film to achieve a resultant dry film thickness of 0.1 to 5μm.

A coating method in which the metallic basecoat paint using the coating composition of the present invention

is applied on one surface of a transparent substrate, and a colored clear paint containing colored pigment and/or dyes is applied on the other surface of the transparent substrate, followed by curing each paint respectively is preferable.

In a method of applying the metallic basecoat paint using the coating composition of the present invention on a surface of the object to be painted, followed by applying the colored clear paint, it is preferable that the metallic basecoat paint forms a coated film having an IV value of 230 or more and a measured value of particle feeling (HG value) by means of a micro brilliance feeling-measuring apparatus is 60 or smaller.

The following is an explanation of a preferable method of forming a multi-layered coated film using the coating composition of the present invention. First, a metallic basecoat paint using the coating composition of the present invention is applied, then a clear coat paint is applied on the resultant basecoat, and the coated film is heated so that the coated film is cured. Then, the colored clear coat paint containing the color pigment and/or dye is further applied onto the obtained clear coat, and a top clear coat paint is applied on the resultant colored clear coat.

In the case of a method of applying a metallic basecoat paint using the coating composition of the present invention onto the surface of the object to be painted, followed by applying the clear paint, it is preferable that the metallic basecoat paint contains, as the brilliant pigments, a vapor-deposited aluminum piece to which a leafing property was endowed.

An explanation will be described below about the case where the metallic basecoat paint using the coating composition of the present invention contains, as the brilliant pigments, the vapor-deposited aluminum piece to which a leafing property was endowed. The vapor-deposited aluminum piece to which a leafing property was endowed may be obtained by processing a surface treatment using, for example, a hydrophobic agent and/or an oil repellent agent over vapor-deposited aluminum pieces below. After vapor-depositing aluminum onto a substrate such as plastics, metals, or others, in accordance with the known method in itself, film-like articles or sheet-like articles (thickness of 0.01 to 0.2$\mu$m, preferably 0.01 to 0.1$\mu$m) are obtained by peeling the aluminum apart from the substrate, followed by crushing or slitting the articles, to obtain the above vapor-deposited aluminum pieces. It is preferable that the above vapor-deposited aluminum piece has a shape and size in a thickness of 0.01 to 0.2$\mu$m, preferably 0.01 to 0.1$\mu$m, and in an aspect ratio of from 100 to 300, preferably 150 to 250. Further, the size in the longitudinal direction is preferably from 5 to 20$\mu$m.

The blending amount of the above vapor-deposited aluminum pieces to which the leafing property was endowed is 5 to 50 parts by weight, preferably 15 to 40 parts by weight, further preferably 20 to 35 parts by weight with respect to 100 parts by weight of the resin solid content in the paint.

Other brilliant pigments may be used together with the above vapor-deposited aluminum pieces to which the leafing property was endowed. Examples of other brilliant pigments, aluminium flakes, metal oxide-covered alumina flakes, metal oxide-covered silica flakes, graphite pigments, metal oxide-covered mica, titanium flakes, stainless flakes, bismuth oxychloride, plate-type iron oxide pigments, metal-plated glass flakes, metal oxide-covered glass flakes, hologram pigments, and the like, and they can be used solely or two or more of them can be used in combination.

The coated film obtained from the metallic basecoat paint using the coating composition of the present invention has an IV value of preferably 230 or more, more preferably 250 or more, and a measured value of particle feeling (HG value) on a micro brilliance feeling-measuring apparatus of preferably 60 or less, more preferably 50 or less.

Herein, the "IV value" is an abbreviation of Intensity Value and means a degree of contrast, which is a characteristic value used as an index for orientation, metallic feeling, and the like of the brilliant pigment in a coating film containing the brilliant pigment. The larger value of the IV value means better orientation and higher metallic feeling of the brilliant pigment. The IV value can be measured by means of a metallic feeling-measuring apparatus (for example, "ALCORP" manufactured by Kansai Paint Co., Ltd).

Moreover, herein, "HG" is an abbreviation of Hi-light Graininess and the HG value is a measured value of particle feeling at highlight of the surface of the coating film, the value being obtained by means of a micro brilliance feeling-measuring apparatus. The "micro brilliance feeling" means an inherent texture of brilliance expressed in the coating color containing the brilliant pigment and corresponds to, for example, roughness in texture, glitter, brightness, rough texture, particle size, and the like of aluminum, mica, or the like. The micro brilliance feeling-measuring apparatus is not particularly limited as far as it has a light source, a CCD camera, and an image analyzing apparatus. For example, an apparatus disclosed in JP-A-2001-221690 can be applied. Specifically, the apparatus is capable of placing as a light source an optical fiber-type halogen light, to which a condensing lens is attached at the end, on a line perpendicular to a measuring surface; photographing the coating surface at an angle, where an irradiation light is not incident, by the CCD camera wherein an AF macro 100 mm F 2.8 lens is attached to "RD-175" manufactured by Minolta; cutting an original data of the photographed image into a digital image data of monochromatic 256 gradation having 512 $\times$ 512 pixels on a computer; and then subjecting the data to digital processing by an image-analyzing software. The HG value can be determined as follows: a two-dimensional power spectrum integration value is obtained according to the following equation (Formula 1), the value being obtainable by integrating the power of low spatial frequency component from a spatial frequency spectrum obtained by two-dimensional Fourier transformation of the two-dimensional image obtained by photographing the light-irradiated coating surface by the CCD camera and normalizing the integrated power with a

direct current component; and then the HG value is calculated as a value of MGR which is calculated according to the following linear expression based on the two-dimensional power spectrum integration value (IPSL value). Namely, MGR=[(IPSL $\times$ 1000)-285]/2 when the IPSL value is 0.32 or more, MGR=[IPSL $\times$ (35/0.17) - (525/17)]/2 when the IPSL value is in the range of 0.15<IPSL<0.32, and MGR=0 when the IPSL value is 0.15 or less.

The MGR value is regarded as 0 when no particle feeling of the brilliant pigment is observed and is regarded as 100 when the most particle feeling of the brilliant pigment is observed. Thus, the dense one having a lesser "particle feeling" shows a lesser value.

Formula 1

$$\text{Two-dimensional power spectrum integral value} = \frac{\int_0^L \int_0^{2\pi} P(\nu, \theta)\, d\nu\, d\theta}{P(0,0)}$$

wherein ν is a spatial frequency, θ is an angel, P is a power spectrum, 0 to L means a low spatial frequency region, and L means an upper limit of an extracted frequency.

In the present invention, there are various techniques for setting the IV value and HG value to specific ranges. For example, there may be mentioned a method of increasing the concentration of the brilliant pigment to be blended, a method of thinning the coating film obtained by the metallic base coating, a method of conducting multi-stage coating application, a method of lowering solid content in the coating at its application, or the like. The thinning of the film is a method of improving orientation of the brilliant pigment by applying a coating having a high concentration of the brilliant pigment (20 to 200 parts by weight, preferably 20 to 100 parts by weight, more preferably 25 to 80 parts by weight of the brilliant pigment based on 100 parts by weight of resin solid content in the coating) so that the coating film thickness (dry film thickness) is from 0.3 to 5μm, preferably from 0.3 to 3μm. The multi-stage coating application is a method of applying coatings at two or more stages, preferably at three or more stages and it is desirable from the viewpoint of improving orientation of the brilliant pigment that the application is conducted so that the coating film thickness at each stage particularly at and after the second stage is in the range of 0.3 to 5μm, preferably 0.3 to 4μm and baking or pre-heating is conducted after the first stage application.

The basecoat paint is the material which generates the largest amount of VOC in the automobile painting line, so the aqueous basecoat paint has been applied in the line recently (JP-A-2006-95522). As the coating composition to be used in the present invention is easily obtained by making the build-up organic pigment fine-particles as an aqueous dispersion, it is also easy to prepare the coating composition by mixing the solution and the aqueous basecoat paint each other, and it is possible to realize a highly transparent paint. When the aqueous basecoat paint is metallic basecoat paint, it is composed of a water-soluble or water-dispersible basic substance resin, a curing agent and scale brilliant pigments. When the aqueous basecoat paint is colored basecoat paint, it is composed of a water-soluble or water-dispersible basic substance resin, a curing agent and a colorant.

Examples of the basic substance resin include resins such as acrylic resin, polyester resin, alkyd resin, epoxy resin, polyurethane resin and the like each having a hydrophilic group (for example, a carboxyl group, a hydroxy group, a methylol group, an amino group, a sulfonate group, polyoxyethylene bond) in sufficient amount for making the resin water-soluble or water-dispersible and the functional group (for example, hydroxy group) capable of crosslinking reaction with the curing agent. Among those, an acrylic resin or a polyester resin each having a carboxyl group is preferable. The acrylic resin or the polyester resin each having the carboxyl group may have the acid value usually in the range of 10 to 100 mgKOH/g, and preferably in the range of 15 to 50 mgKOH/g.

Depending upon the kind of existing hydrophilic group, the basic substance resin can be made water-soluble or water-dispersible by neutralizing it by, for example, a basic substance or an acid. Further, on the occasion of preparation of the basic substance resin by polymerization, the basic substance resin can be made water-dispersible by subjecting its monomer component to emulsification polymerization under the presence of a surfactant.

As the curing agent, amino resins, blocked polyisocyanate compounds and so on are usable. Examples of the amino resin include methyrolated amino resin obtained by a reaction between amino component (such as melamine, urea, benzoguanamine, acetoguanamine, steroguanamine, spiroguanamine, and dicyandiamide) and aldehyde. Examples of aldehyde include formaldehyde, paraformaldehyde, acetaldehyde, benzaldehyde and so on. Further, etherification products of the methyrolated amino resin using suitable alcohol are usable, and examples of alcohol for etherification include methyl alcohol, ethyl alcohol, n-propyl alcohol, i-propyl alcohol, n-butyl alcohol, i-butyl alcohol, 2-ethyl butanol, 2-ethylhexanol, etc.

In addition, a compound obtained by blocking an isocyanate group among a polyisocyanate compound having at least two isocyanate groups in its one molecule with a blocking agent such as oxime, phenol, alcohol, lactam, mercaptan and the like can be used as the blocked polyisocyanate compound.

Constitution ratio of the basic substance resin and the curing agent is in the range of 50 to 90% by weight, particularly from 65 to 85% by weight with respect to the former, from 50 to 10% by weight, particularly from 35 to 15% by weight with respect to the latter, respectively, each based on the total solid content amount of both these components.

It is preferable that the aqueous basecoat paint using the coating composition of the present invention contains an aqueous resin dispersion prepared as follows. First, a mixture containing a polyurethane resin, a polymerizable unsaturated monomer, and an emulsifying agent, in which the polyurethane resin is obtained by reaction of a polyol, a polyisocyanate compound, and a hydroxyl group-containing ethylenically unsaturated monomer, is micro-dispersed in an aqueous medium so that the average particle size would be 500 nm or smaller. Then, monomer components including a carboxyl group-containing polymerizable unsaturated monomer and a carbonyl group-containing polymerizable unsaturated monomer, are added into the dispersion obtained by polymerizing the above emulsification product. Then, the resultant dispersion is polymerized, to give the target aqueous base coat paint..

The scale brilliant pigments have the same meaning as the above-mentioned luster materials (brilliant pigments). When the aqueous basecoat paint is prepared, it may contain a colorant as occasion demands, in addition to the scale brilliant pigments, and the same knowledge as the foregoing description about the metallic basecoat paint may be applicable.

Also, an organic solvent, an optical interference pigments, an extender pigment, a pigment dispersing agent, a sedimentation-preventing agent, a curing catalyst, an antifoaming agent, a thickener, an anti-rust agent, an ultraviolet absorber, a surface regulating agent and the like may be appropriately blended into the aqueous basecoat paint as occasion demands.

Onto the coated film that was made by applying the aqueous basecoat paint, a top clear paint may be usually applied. As the top clear paint, for example, those known in themselves and usually used for applying the bodies of the automobiles are employable. An organic solvent series thermosetting type paint or an aqueous thermosetting type paint which is composed of a basic substance resin and a crosslinking resin as a resin component respectively, which will be exemplified below, is preferable. Specific examples of the basic substance resin include an acrylic resin, a polyester resin, an alkyd resin, a urethane resin, an epoxy resin each having a crosslinking functional group such as a hydroxy group, a carboxyl group, an epoxy group and the like. Specific examples of the crosslinking agent include a melamine resin, a urea-formaldehyde resin, a polyisocyanate compound which may be blocked, a carboxyl group-containing compound or resin, an epoxy group-containing compound or resin.

Into the clear paint, color pigments, brilliant pigments and the like may be contained as occasion demands to the extent which does not obstruct the transparency; furthermore, an extender pigment, an ultraviolet absorber, an antifoaming agent, a thickener, an anti-rust agent, a surface regulating agent and the like may be also contained appropriately.

The object to be painted used in the painting of the present invention is a metallic or a plastic object to be painted such as an automobile body exterior plates of a car, a track, a motorcycle, a bus and the like; and home electric appliance exterior plates. The aqueous basecoat paint is applied directly, or after pre-painting undercoat paint or an intermediate paint such as cationic electrodeposition paint onto the object to be painted and curing the coated film. It is preferable that the metal object to be painted is subjected to a chemical conversion treatment using phosphoric acid salt, chromate and the like beforehand. In addition, as the undercoat paint and the intermediate paint, those known in themselves are usable.

Regarding the painting machine to be used, the painting machine such as a rotary atomization system electrostatic painting machine, an airless spray painting machine, an air spray painting machine are preferable, and the rotary atomization system electrostatic painting machine is particularly preferable. Further, in order to apply two kinds of aqueous basecoat paints different in their solid contents each other, a paint cassette type painting machine capable of easily exchanging the paint is preferable and in particular, a paint cassette type rotary atomization system electrostatic painting machine is also preferable in the painting lines for automobiles, etc.

The aqueous basecoat paint can be applied at two stages or at three or more stages. At the first stage, the aqueous basecoat paint (A1) which was adjusted so that the solid content in the paint is 20 to 40% by weight is applied onto the object to be painted so that the dry film thickness is from 1 to 15$\mu$m.

At the second stage, the aqueous basecoat paint (A2) which was adjusted so that the solid content in the paint is 2 to 15% by weight is applied onto the uncured coated film of the aqueous basecoat paint (A1) so that the dry film thickness is from 0.1 to 5$\mu$m. Especially, the solid content in the paint of the aqueous basecoat paint (A2) is preferably in the range of 7 to 10% by weight, further preferably in the range of 8 to 9% by weight.

After the painting at the first stage and the second stage, conducting of setting for about 30 seconds to 3 minutes is preferred, and drying after pre-heating at a temperature of an extent which does not cure the coated film may be also suitable.

Although the painting of the basecoat may be finished by the second stage, for the purpose of obtaining the coated film which is superior in brilliance feeling, a process of further applying the aqueous basecoat paint (A2) and conducting the setting or the pre-heating so that the film thickness is 0.1 to 5μm may be repeated.

As the foregoing description, after applying the top clear paint using the painting machine such as the rotary atomization system electrostatic painting machine, airless spray painting machine, air spray painting machine and the like onto the uncured coated film of the aqueous basecoat paint applied at two stages or at three or more stages, a simultaneous thermosetting of both coated films at 100 to 180°C, preferably at 120 to 160°C for 10 to 40 minutes enables to obtain multi-layered coated film superior in a brilliance feeling.

In addition, the aqueous basecoat paint (A1) and the aqueous basecoat paint (A2) may be prepared either by changing only dilution rate of the same paint, or by adjusting the solid content of the paints different in a ratio of the brilliant pigments with respect to the basic substance resin. Strengthening the ratio of the brilliant pigments of the aqueous basecoat paint (A2) with respect to its basic substance resin higher than that of the aqueous basecoat paint (A1) enables to obtain the coated film which is further superior in the brilliance feeling.

The coating composition of the present invention can be applied onto various kinds of painting substrates. Expectable examples of materials for the substrate include metals, plastics, glasses and lumbers. In the case where the substrate is a plastic, it may be either opaque or transparent. When the substrate is transparent, ordinary examples of highly designed article obtained by using the coating composition of the present invention include those products obtained by forming a coated film of the brilliant paint onto a concave side of a transparent substrate molded into a predetermined shape, and by forming a coated film of the color clear paint onto a convex side of the substrate. It is particularly preferable that the surface onto which the brilliant paint is applied is smooth because the brilliant pigments which are blended into the brilliant paint are orientated in parallel with the surface of the coated film at the timing of the film formation. Regarding the shape of the above highly designed article, a three-dimensional shape is preferable because it exhibits highly designed performance when it is observed from the coated film side using the colored clear paint formed onto the convex side, however, a two-dimensional shape may be suitable.

Specific examples of the above highly designed article include automobile parts such as side mirrors, wheel covers, front grilles and so on, cabinets of OA devices such as personal computers, word processors and home electric appliances ,toys and cell phones, etc.

As the painted article except the highly designed article which is obtained by applying the coating composition of the present invention, colored metallic cans are preferable.

When the metallic coated film is formed by using the metallic basecoat paint, the coating composition of the present invention can endow extremely denser particle feeling and high metallic feeling. Further, the coating composition of the present invention is also preferable from the viewpoint of environmental problems such as unnecessity of heavy metals, capability of adopting the aqueous paints, etc. These coating compositions of the present invention are useful especially as the metallic basecoat paint, for automobile exterior plates and the parts (for example, side mirrors, wheel covers, front grilles) and motorcycles. Furthermore, these coating compositions of the present invention are extremely useful as overcoat metallic paints for the cabinets of OA devices such as personal computers, word processors, cell phones and home electric appliances, etc.

## EXAMPLES

The present invention will be described in more detail based on the following examples, but the present invention is not limited thereto. In the following Examples, the terms "part" and "%" are values by mass, unless they are indicated differently in particular.

The particle size distribution shown in the synthesis examples of the build-up organic pigment was measured by means of NANOTRAC UPA150EX (Trade name) manufactured by Nikkiso Co., Ltd.

(Production Example 1)

First, 0.5 g of 2,9-dimethylquinacridone (PR 122, HOSTAPERM PINK E, manufactured by Clariant Co., Ltd.) was dissolved at room temperature in 5.0 mL of dimethylsulfoxide, 0.85 mL of methanol solution of 28% sodium methoxide (manufactured by Wako Pure Chemical Industries, Ltd.), and 2.0 mL of a DMSO solution of 25% Aqualon KH-10 (manufactured by Dai-ichi Kogyo Seiyaku Co., Ltd.) (Solution IA). The pH of the Solution IA exceeded a measuring limit (pH 14), and was not able to be measured. Distilled water was designated as Solution IIA. They were allowed to pass through a micro-filter of 0.45 μm (manufactured by Sartorius Co.), to remove impurities such as dust.
Then, the reaction was conducted in the following procedure, using a simplified reactor having a channel configuration of a reactor in Fig. 1-1. In Fig. 1-1 (and Fig. 1-2), 10 illustrates the reactor main unit, 11 and 12 each illustrates an introduction inlet, 13 illustrates a flow path, 13a and 13b each illustrates an introduction flow path, 13c illustrates a reaction flow path, 13d illustrates a fluid confluence and 14 illustrates a discharge outlet. More specifically, two Teflon

(Registered Trademark) tubes having a length of 50 cm and an equivalent diameter of 1 mm were connected to two inlets of a Teflon (Registered Trademark) Y-shaped connector (manufactured by TOKYO RIKAKIKAI CO, LTD.) having an equivalent diameter or 500 μm, using a connector. At ends of the tubes, syringes respectively containing Solution IA and Solution IIA were connected and set at a pump. At an outlet of the connector, a Teflon (Registered Trademark) tube having a length of 1.5 m and an equivalent diameter of 500 μm was connected. Solution IA was sent out at a solution sending speed of 96 mL/h, and Solution IIA was sent out at a solution sending speed of 600 mL/h (Reynolds number: about 500). As the dispersion of 2,9-dimethylquinacridone was obtained from the tip end of the outlet of the tube, this was collected. Further, potassium persulfate ($K_2S_2O_8$) corresponding to 5% amount of Aqualon KH-10 contained in the pigment diepersion was added, followed by heating at 70°C for 5 hours. The volume average particle diameter Mv of the obtained dispersion was 19.5 nm, and the ratio of Volume average particle diameter Mv/Number average particle diameter Mn that is an index of monodispersibility was 1.52. Then, the pigment dispersion was purified in an ultrafiltration device (UHP-25K, trade name, manufactured by Advantec MFS, Inc., fractional molecular weight: 200,000) while the total solution amount is held constant by addition of distilled water, and then, concentrated, to give an aqueous dispersion (Pigment Diepersion 1) at a pigment concentration of 7.5 mass%.

(Production Example 2)

A dispersion was produced in the same way as in Example 1, except that Aqualon KH10 was replaced by an equivalent mass of styrene (special grade, manufactured by Wako Pure Chemical Industries, Ltd.).
Further, $K_2S_2O_8$ corresponding to 1% amount of styrene contained in the pigment dispersion was added, followed by heating at 70°C for 5 hours. The particle sizes of the resultant pigment dispersion were measured, and the volume-average diameter Mv of the fine-particles contained was 39.8 nm and the ratio of Volume average particle diameter Mv/Number average particle diameter Mn that is an index of monodispersibility was 1.80.
Then, the pigment dispersion was purified in an ultrafiltration device (UHP-25K, trade name, manufactured by Advantec MFS, Inc., fractional molecular weight: 200,000) while the total solution amount is held constant by addition of distilled water, and then, concentrated, to give an aqueous dispersion (Pigment Diepersion 2) at a pigment concentration of 7.8 mass%.

(Production Example 3)

A stirrer was placed in a 50 mL beaker, and 25.0 mL, of Solution IIA was stirred at room temperature. Then, 0.5 mL of Solution IA was poured to Solution IIA with a syringe to obtain a dispersion of 2,9-dimethylquinacrldone (PR122). Then, polymerization treatment, purification and concentration were conducted in the same manner as the Production Example 1, and Pigment Diepersion 3 of the present invention having 7.8 mass% was obtained. The volume-average diameter Mv of Pigment Diepersion 3 was 46.5 nm and the ratio of Volume average particle diameter Mv /Number average particle diameter Mn that is an index of monodispersibility was 1.78.

(Production Example 4)

First, 0.6 g of Pigment Red 254 (CROMOPHTAL RED 2030, manufactured by Ciba Specialty Chemicals company) was dissolved at room temperature in 4.88 mL of dimethylsulfoxide, 0.63 mL of an aqueous solution of 8 mol/L KOH (manufactured by Wako Pure Chemical Industries, Ltd.), and 2.18 mL of a DMSO solution of 25% Aqualon KH-10 (manufactured by Dai-ichi Kogyo Seiyaku Co., Ltd.) (Solution ID). The pH of Solution ID exceeded a measuring limit (pH 14), which was not able to be measured. Distilled water was designated as Solution IID.
They were allowed to pass through a micro-filter of 0.45 μm (manufactured by Sartorius Co.), whereby impurities such as dust were removed. Next, the reaction was conducted in the following procedure, using a reactor of Fig. 1-1. More specifically, two Teflon (Registered Trademark) tubes having a length of 50 cm and an equivalent diameter of 1 mm were connected to two inlets of a Teflon (Registered Trademark) Y-shaped connector (manufactured by TOKYO RIKAKIKAI CO, LTD.) having an equivalent diameter of 500 μm, using a connector. At ends of the tubes, syringes respectively containing Solution ID and Solution IID were connected and set at a pump. At an outlet of the connector, a Teflon (Registered Trademark) tube having a length of 1.5 m and an equivalent diameter of 500 μm was connected. Solution ID was sent out at a solution sending speed of 96 mL/h, and Solution IID was sent out at a solution sending speed of 600 mL/h (Reynolds number: about 500). As a dispersion of Pigment Red 254 was obtained from the tip end of the outlet of the tube, this was collected.
Further, $K_2S_2O_8$ corresponding to 5% amount of Aqualon KH-10 contained in the pigment dispersion was added, followed by heating at 70°C for 5 hours. The volume average particle diameter Mv of the obtained dispersion was 39.5 nm, and the ratio of Volume average particle diameter Mv/Number average particle diameter Mn that is an index of monodispersibility was 1.40. Then, the pigment dispersion was purified and concentrated in an ultrafiltration device (UHP-25K,

trade name, manufactured by Advantec MFS, Inc., fractional molecular weight: 200,000) while the total solutions amount is held constant by addition of distilled water, and then, to give an aqueous dispersion (Pigment Diepersion 4) at a concentration of 8.2 mass%.

(Production Example 5)

3.0 g of Pigment Yellow 128 (CROMOPHTAL YELLOW 8GNP, manufactured by Ciba Specialty Chemicals company) was dissolved at room temperature in 45.5 mL of dimethylsulfoxide, 2.49 mL of methanol solution of 28% sodium methoxide (manufactured by Wako Pure Chemical Industries, Ltd.), 2.4 g af Aqualon KH-10 (manufactured by Dai-ichi Kogyo Seiyaku Co., Ltd.), 0.6 g of N-vinylpyrolidone (manufactured by Wako Pure Chemical Industries, Ltd.), 0.15 g of polyvinylpyrolidone K30 (manufactured by Tokyo Kasei Kogyo Co., Ltd.), and 1.5 g of VPE0201 (manufactured by Wako Pure Chemical Industries, Ltd.) (Solution IE). The pH of Solution IE exceeded a measuring limit (pH 14), which was not able to be measured. Distilled water was designated as Solution IIE. They were allowed to pass through a microfilter of 0.45 μm (manufactured by Sartorius Co.), whereby impurities such as dust were removed. As the microreactor, a three-diinensional microreactor as shown in Fig. 2 having the following division number (number of flow paths) and the like was used.

(i) Number of supply flow paths (n) ... divided into 5 with respect to each of two kinds of reaction solutions (10 flow paths in total are combined. In the microreactor shown in Fig. 2, eight flow paths in total (four each) are combined.)

| | |
|---|---|
| (ii) Width (W) of supply flow paths 91, 92 | 400 μm each |
| (iii) Depth (H) of supply flow paths 91, 92 | 400 μm each |
| (iv) Diameter (D) of combination region 90 | 800 μm each |
| (v) Diameter (R) of micro-flow path 93 | 800 μm |
| (vi) Cross angle of center axes of the respective supply flow paths 91, 92 and micro-flow path 93 in combination region 90 | 90° |
| (vii) Material for the microreactor | Stainless steel (SUS 304) |
| (viii) Flow path processing method | Micro-discharge |

processing method was performed, and three parts of supply block 81, combination block 82, and reaction block 83 were sealed with a metal surface seal method by mirror grinding. Two Teflon (Registered Trademark) tubes having a length of 50 cm and an equivalent diameter of 1 mm were connected to two inlets with a connector, and syringes respectively containing Solution IE and Solution IIE were connected to the ends of the inlets and set at a pump. A Teflon (Registered Trademark) tube having a length of 1.5 m and an equivalent diameter of 2 mm was connected to an outlet of the connector. IE solution was sent out at a solution sending speed of 150 mL/min, and Solution IIE was sent out at a solution sending speed of 600 mL/min. As a dispersion of Pigment Yellow 128 was obtained from the tip end of the outlet of the tube, so this was collected and heated at 80°C for 5 hours. Analysis of the particle diameter showed that the volume-average diameter Mv was 25.5 nm and the ratio of Volume average particle diameter Mv/Number average particle diameter Mn that is an index of monodispersibility was 1.48.
Then, the dispersion was purified and concentrated in an ultrafiltration device (UHP-62K, trade name, manufactured by Advantec MFS, Inc., fractional molecular weight: 50,000) while the total solution amount is held constant by addition of distilled water, to give an aqueous dispersion (Pigment Diepersion 5) at a pigment concentration of 7.1mass%.

(Production Example 6)

Preparations of Reaction Solutions (A) to (D) to be used in the synthesis were conducted as follows. Respective solutions were homogeneous solutions, and those filtered with PTFE (polytetrafluoroethylene) micro filter of 500μm after preparation were used. Additionally, abbreviations represent the following compounds. PC-2Na: Disodium phthalocyanine, DMSO: Dimethylsulfoxide, PVP: Polyvinylpyrrolidone.

Solution (A): 2.5g (4.5 mmol) of PC-2Na was dissolved into DMSO by stirring at room temperature to obtain 500 ml of the solution. Blue greenish solution.
Solution (B): 5.0 g of PVP (mass average molecular weight: 360,000) was dissolved into DMSO by stirring at 100°C to obtain 500 ml of the solution. Colorless and Transparent solution.
Solution (C): 5.0 g (11.7 mmol) of N-oleoyl-N-methyl taurine sodium salt was dissolved into DMSO by stirring at room temperature for 1 hour to obtain 500 ml of the solution. Colorless and Transparent solution.

Solution (D): 10.1g (45.0 mmol) of $CuBr_2$ was dissolved into DMSO by stirring at room temperature to obtain 500 ml of the solution. Yellowish solution.

Taking 200 ml of Solution (B) and 100 ml of Solution (D) into a flask, the resultant mixture solution was stirred and mixed each other under a nitrogen gas stream at room temperature. Into the resultant solution, a mixture solution of 100 ml of Solution (A) and 100 ml of Solution (C) was dropped by means of a syringe pump over a period of 1 hour. The resultant precipitate was filtered through a PTFE filter of 0.1μm. The DMSO phase (the filtrate) was pale yellow, and there was absolutely no contamination of a blue compound. Putting the resultant blue substance and the PTFE filter to which the substance adhered into a flash, and adding 100 ml of 1.0 mass% N-oleoyl-N-methyl taurine sodium salt aqueous solution into the flask, the resultant mixture solution was subjected to ultrasonic wave irradiation for 10 minutes (using an ultrasonic washer of 30 W, oscillatory frequency: 45 KHz), followed by stirring for 1 hour with a stirrer. When the solution was allowed to pass through a CE filter of 0.45μm, almost all blue colors migrated to the filtrate and an extremely small amount of substances were separated from the solution. As a result of measuring the particle size of the filtrate, the volume average particle size Mv was 55.8 nm (number distribution). The pigments concentration was measured and the solution was identified as PB 15 (copper phthalocyanine) pigments aqueous dispersion of 6.5 mass% (Dispersion 6).

(Production Example of Sample for comparison)

The particle sizes and the particle size distributions of the pigment dispersions for comparison which were synthesized (dispersed) in accordance with the break-down method (ultrasonic dispersion) will be described below. They were prepared in the manners that all the concentrations are 8 mass%.

| | |
|---|---|
| PR 122 (Dispersion for comparison 1) | Mv = 101.2nm, Mv/Mn = 2.2 |
| PR 254 (Dispersion for comparison 2) | Mv = 105.7nm, Mv/Mn = 2.3 |
| PR 128 (Dispersion for comparison 3) | Mv = 110.6nm, Mv/Mn = 2.2 |
| PB 15 (Dispersion for comparison 4) | Mv = 98.8nm, Mv/Mn = 2.0 |

(Example 1)

20 parts of ionized water was added into 100 parts of pearl pigment dispersion (Aqua Copra Ace Pearl White SP06-10560AQ) manufactured by Musashi Paint Co., Ltd. The resultant mixture solution and Pigment Dispersion 1 prepared in Production Example 1 were mixed each other with a weight ratio of 10:1. The resultant dispersion was applied onto a glass substrate with a thickness or 10μm, and the coated film was dried at 60°C for 30 minutes. The resultant article was referred to as Sample 1.

(Examples 2 to 6)

Samples 2 to 6 were prepared in the same manner as Example 1 except that the Dispersion 1 was replaced to Dispersions 2 to 6 obtained in Production Examples 2 to 6, and that the final pigment concentrations in the dispersion were adjusted to be the same using ionized water.

(Comparative Examples 1 to 4)

Sample for comparisons 1 to 4 were prepared in the same manner as Example 1 except that the Dispersion 1 was replaced to Dispersion for comparisons 1 to 4, and that the final pigment concentrations in the dispersion were adjusted to be the same using ionized water.

Observing the sample glass plates obtained in Examples and Comparative Examples from backside, metallic feelings and transparent feelings were evaluated by visual observation with the naked eye. In addition, IV values and HG values of the coated plates were measured by means of the metallic feeling-measuring apparatus and the micro brilliance feeling-measuring apparatus. The results are shown in Table 1.

[Table 1]

Table 1

| No. | | Visual Observation | | Color Measurement | |
|---|---|---|---|---|---|
| | | Transparent feeling | Metallic feeling | IV value | HG value |
| This Invention | Dispersion 1 (PR122) | 4 | 4 | 310 | 30 |
| | Dispersion 2 (PR122) | 4 | 4 | 280 | 42 |
| | Dispersion 3 (PR122) | 3 | 4 | 250 | 48 |
| | Dispersion 4 (PR254) | 4 | 4 | 295 | 20 |
| | Dispersion 5 (PY128) | 4 | 4 | 285 | 22 |
| | Dispersion 6 (PB15) | 3 | 4 | 260 | 45 |
| Comparative Example | Dispersion for comparison 1 (PY122) | 2 | 2 | 230 | 56 |
| | Dispersion for comparison 2 (PR254) | 2 | 2 | 210 | 55 |
| | Dispersion for comparison 3 (PY128) | 1 | 1 | 170 | 60 |
| | Dispersion for comparison 4 (PB15) | 2 | 3 | 220 | 58 |

Visual observation evaluation: Observing the sample glass plates in the bright outdoors without any direct sunlight, metallic feelings and transparent feelings were evaluated.

Transparent Feelings
4: Superior in the transparent feeling.
3: A certain transparent feeling was recognized.
2: Almost no transparent feeling.
1: Without any transparent feeling at all.

Metallic Feelings
4: Superior in the metallic feeling.
3: A certain metallic feeling was recognized.
2: Almost no metallic feeling.
1: Without any metallic feeling at all.

The above results show that the coating composition using the build-up organic pigment of the present invention exhibits superior metallic appearance and brilliancy in comparison with the coating composition using the pigments produced in accordance with the break-down method.

(Example 7)

Production of Oligomer (A-1)

Into a reactor equipped with a stirrer, reflux condenser, water separator and thermometer, 190 parts of 1,2,4-butane tricarboxylic acid and 490 parts of Cardura E10P (neodecanoic acid mono glycidyl ester; manufactured by Japan Epoxy Resins Co., Ltd.) were added and the resultant mixture was allowed to react at 120°C for 3 hours to obtain Oligomer (A-1) whose hydroxyl value was 164 mgKOH/g, acid value was 82 mgKOH/g, and number average molecular weight was 690.

Production of Polyester Resin (A-2)

Into a reactor equipped with a stirrer, reflux condenser, water separator and thermometer, 190 parts of 1,2,4-butane tricarboxylic acid and 613 parts of Cardura E10P were added and the resultant mixture was allowed to react at 120°C for 4 hours, followed by elevating the temperature up to 230°C, and further allowed to react for 2 hours. Afterwards, the resultant mixture was cooled down to 160°C. 96 parts of trimellitic anhydride was added, and the mixture was allowed to react for 3 hours to obtain Polyester Resin (A-2) whose hydroxyl value was 80 mgKOH/g, acid value was 49 mgKOH/g, and number average molecular weight was 2000.

Production of Crosslinking Agent B

Into a reaction apparatus equipped with a thermometer, thermostat, stirrer, reflux condenser, a drip pump and so on, 605 parts of Sumidure N-3300 (manufactured by Sumitomo Bayer Urethane Co., Ltd.; isocyanurate structure-containing polyisocyanurate; number average molecular weight: about 600, isocyanurate content: 21.6%), 413 parts of diethyl malonate, and 181 parts of ethyl acetate were blended, and adding 7.0 parts of methanol solution of 28% sodium hydroxide under a nitrogen gas stream, the resultant mixture was held at 60°C for 12 hours. Then, NCO value was measured. As the result, the isocyanate content was 0.2%. Into the resultant mixture, 99 parts of ethyl acetate was added to obtain a resin solution. Separating out 505 parts of the resin solution into another similar reaction apparatus, 450 parts of propylene glycol monopropyl ether was added, and the temperature was elevated up to 90°C. Under the reduced pressure condition, keeping the temperature of the system at 80 to 90°C, the solvent in the resin solution was distillated and removed over a period of 2 hours, to obtain 624 parts of blocked polyisocyanate curing agent solution. In a simplified trap for the removed solvent, 42 parts of ethanol was contained. The resultant blocked polyisocyanate curing agent solution was diluted using propylene glycol monopropyl ether to obtain blocked polyisocyanate curing agent solution (Crosslinking Agent B) with solid content of 80%. The number average molecular weight of the blocked polyisocyanate curing agent was about 1,800.

Production Method of Water-dispersible Polymer Particles (C)

Into a reaction vessel equipped with a thermometer, thermostat, stirrer, reflux condenser and a dripping apparatus, 145 parts of deionized water and 1.2 parts of Newcol 562SF (Notification 1) were introduce, and the resultant mixture was stirred and mixed under a nitrogen gas stream, followed by elevating the temperature up to 80°C. Then, 1% of the total amount of the following Monomer Emulsified Substance 1 and 5.2 parts of 3% ammonium persulfate aqueous solution were introduced into the reaction vessel, followed by holding it at 80°C for 15 minutes. Then, the residual Monomer Emulsified Substance 1 was dripped into the reaction vessel over a period of 3 hours, and after the dripping was completed, it was matured for 1 hour. Afterwards, the following Monomer Emulsified Substance 2 and 1.5 parts of 3% ammonium persulfate aqueous solution were added dropwise over a period of 2 hours, followed by maturing for 1 hour. Then, the resultant mixture was cooled down to 30°C while slowly adding 89 parts of 1.5% dimethylethanolamine aqueous solution to the reaction vessel, the mixture was discharged while filtering with nylon cross of 100 mesh to obtain water-dispersible acrylic polymer particles (C) (solid content: 25.2%) whose average particle size was 100 nm (diluted with deionized water, and measured at 20°C by means of submicron particle size distribution measuring apparatus "COULTER N4 type" (manufactured by Beckman Coulter, Inc.), the acid value was 30.7 mgKOH/g, and the hydroxyl value was 22.1 mgKOH/g.
(Notification 1) Newco1562SF: Trade name; manufactured by Nippon Nyukazai Co., Ltd., polyoxyethylene alkylbenzene sulfonic acid ammonium, effective component: 60%.
Monomer Emulsified Substance 1: 94.3 parts of deionized water, 17 parts of methyl methacrylate, 80 parts of n-butyl acrylate, 3 parts of allyl methacrylate and 1.2 parts of Newcol562SF were mixed and stirred to obtain Monomer Emulsified Substance 1.
Monomer Emulsified Substance 2: 39 parts of deionized water, 15.4 parts of methyl methacrylate, 2.9 parts of n-butyl acrylate, 5.9 parts of hydroxy ethyl acrylate, 5.1 parts of methacrylic acid and 0.5 parts of Newco1562SF were mixed and stirred to obtain Monomer Emulsified Substance 2.

Production of Thermosetting Aqueous Paint (Production of aqueous overcoat basecoat paint)

Into 20 parts of the above-mentioned Oligomer (A-1), 43.8 parts of Cymel 325 (manufactured by Nihon Cytec Industries Inc.; methyl/butyl mixed etherified melamine formaldehyde resin, solid content: 80%), 178.6 parts of water-dispersible acrylic polymer particles (C) (solid content: 25.2%), 12.5 parts of crosslinking agent Band 25 parts of Superflex 410 were added while stirring. Then, 10 parts of the build-up organic pigments (PR 254) aqueous dispersion which was prepared in the above Production Example 4 and aluminum paste GX180A (manufactured by Asahi Kasei Corporation; aluminum flake paste) in an amount of corresponding to 20 parts as aluminum pigment content were added while stirring, mixed each other and dispersed. Further, by adding dimethylethanolamine and deionized water, the physical property of the resultant mixture was adjusted so that pH was 8.0 and viscosity at 20°C in measurement by means of Ford Cup No. 4 to was 40 seconds, to obtain aqueous overcoat basecoat paint 1.

Coated film formation method (Formation of Test Panel 1)

Using the aqueous overcoat basecoat paint 1, Test Panel 1 was formed as follows.

(Object to be painted)

On the dull steel plate to which zinc phosphate chemical treatment was subjected and having a thickness of 0.8 mm, Elecron 9600 (Trade name; manufactured by Kansai Paint Co., Ltd.; thermosetting epoxy resin based cationic electrodeposition paint) was electrically deposited so that the film thickness was 20μm, followed by heating at 170°C for 30 minutes to cure the coated film. Over the cured coated film, Amilaque TP-65-2 (Trade name; manufactured by Kansai Paint Co., Ltd.; polyester melamine resin based automobile intermediate paint) was applied by air spray painting so that the film thickness was 35μm, followed by heating at 140°C for 30 minutes to cure the painted film and resultantly prepared an object to be painted.

On the object to be painted, aqueous overcoat basecoat paint 1 was applied using rotary type electrostatic painting machine with discharge amount of 300 cc, rotary speed of 25,000 rpm, shaping air pressure of 1.5 kg/cm$^2$, air gun distance of 30 cm, conveyer speed of 5 m/minute, booth temperature/humidity of 25°C/75% so that the film thickness was 15μm, and after leaving the painted substance to stand for 2 minutes, it was pre-heated at 80°C for 3 minutes. Subsequently, onto the uncured basecoat painted surface, a paint prepared by adding Swazol 1000 (manufactured by Cosmo Oil Co., Ltd.; petroleum based aromatic hydrocarbon solvent) to MAGICRON TC-71 (Trade name; manufactured by Kansai Paint Co., Ltd., acryl melamine formaldehyde resin based solvent overcoat clear paint) and adjusting the viscosity to 30 seconds at the temperature of 20°C by Ford Cup No. 4 was applied using a mini-bell type rotary electrostatic painting machine with discharge amount of 200 cc, rotary speed of 40,000 rpm, shaping air pressure of 1 kg/cm$^2$, air gun distance of 30 cm, conveyer speed of 4.2 m/minute, booth temperature/humidity of 25°C/75%, so that the film thickness was 40μ m, and after leaving the painted article to stand for 7 minutes, it was heated at 140°C for 30 minutes so that both these coated films were cured simultaneously to form Test Panel 1.

As a comparative example, aqueous overcoat basecoat paint (Comparative Example) was prepared in the same manner as Example 1 except that the above Dispersion for comparison 2 (PR 254) was used in the same amount as pigments quantity instead of the build-up organic pigment aqueous dispersion which was used as the foregoing aqueous overcoat basecoat paint 1. And a test panel for comparison was formed absolutely in the same manner.

As a result of comparing Test Panel 1 of the present invention and Test Panel for comparison in visual observation, the former was apparently superior in terms of smoothness, luster and vividity. Further, regarding IV value measured by means of laser type metallic feeling-measuring apparatus (ALCORP LMR-200; manufactured by Kansai Paint Co., Ltd.), the Test Panel 1 of the present invention exhibited superior value which is larger than that of Test Panel for comparison. In addition, Test Panel 1 of the present invention was superior in the terms of metallic unevenness.

These results showed that the thermosetting paint using the build-up organic pigment fine-particles is superior in comparison with the case of using the breakdown organic pigment fine-particles.

(Example 8)

20 parts of ionized water was added into 100 parts of pearl pigment dispersion (Aqua Copra Ace Pearl White SP06-10560AQ) manufactured by Musashi Paint Co., Ltd. The resultant mixture solution and Pigment Dispersion 1 prepared in Production Example 4 were mixed each other with a weight ratio of 10:1. Into 70 parts of the resultant dispersion, 35 parts of photopolymerizable compound A and 3 parts of photoinitiator B were added, followed by stirring the resultant mixture. The resultant photosetting paint was applied onto a glass substrate so that the thickness was 10μm, followed by drying at 60°C for 30 minutes.

As a comparative example, photosetting paint for comparison was prepared in the same manner as example 8 except that the Pigment Diepersion 4 was replaced to Dispersion for comparison 2 in the same amount with pigments weight ratio, and the resultant paint was applied onto a glass substrate, followed by drying.

As a result of comparing the coated film of the present invention and the coated film of the comparative example, the coated film of the present invention was superior both in the measurement result of the metallic feeling-measuring apparatus and in the visual observation.

Photopolymerizable compound A

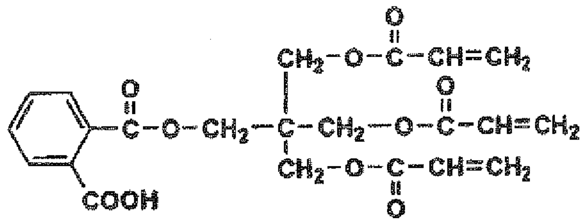

Photoinitiator B

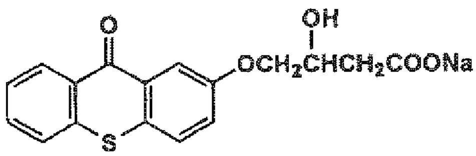

INDUSTRIAL APPLICABILITY

The coating composition of the present invention is the coating composition using a build-up organic pigment fine-particle as its colorant, and it enables to especially raise a denser particle feeling and metallic feeling. Accordingly, it is preferable as the coating composition enabling to form a coated film of metallic painted color having a high color saturation and feeling of high color depth.

Having described our invention as related to the present embodiments, it is our intention that the invention not be limited by any of the details of the description, unless otherwise specified, but rather be construed broadly within its spirit and scope as set out in the accompanying claims.

This application claims priority on Patent Application No. 2006-299042 filed in Japan on November 2, 2006, which is herein incorporated by reference.

## Claims

1. A coating composition comprising a build-up organic pigment fine-particle.

2. The coating composition according to Claim 1, wherein the build-up organic pigment fine-particle is a pigment fine-particle produced in accordance with a coprecipitation method.

3. The coating composition according to Claim 2, wherein the coprecipitation method is carried out in a laminar flow passage.

4. The coating composition according to Claim 2 or 3, wherein the coprecipitation method is a method utilising a pH conversion.

5. The coating composition according to any one of Claims 2 to 4, wherein the coprecipitation method is carried out by means of a microreactor device.

6. The coating composition according to any one of Claims 1 to 5, wherein the average particle size of the build-up organic pigment fine-particles is 80 nm or less.

7. The coating composition according to any one of Claims 1 to 6, wherein a ratio Mv/Mn of a volume average particle size Mv and a number average particle size Mn of the build-up organic pigment fine-particle is 1.80 or less.

8. The coating composition according to any one of Claims 1 to 7, which is a thermosetting paint.

9. The coating composition according to Claim 8, wherein the thermosetting paint contains an oligomer and/or a polyester resin, a crosslinking agent and a water-dispersible polymer particle.

10. The coating composition according to any one of Claims 1 to 7, which is a photosetting paint.

11. The coating composition according to Claim 10, wherein the photosetting paint contains a water-soluble polymerizable compound and a polymerizable surfactant.

12. The coating composition according to any one of Claims 1 to 11, which is a metallic basecoat paint.

13. The coating composition according to any one of Claims 1 to 12, which is an aqueous basecoat paint.

## Fig. 1-1

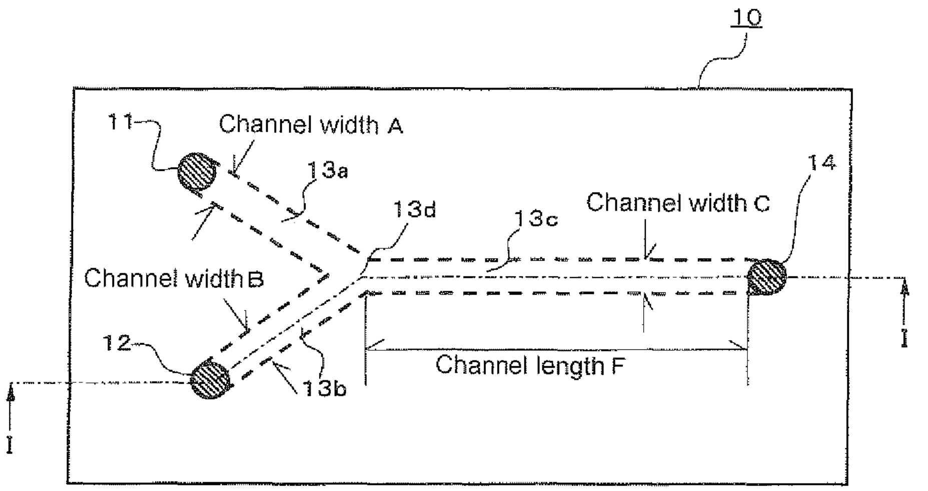


## Fig. 1-2

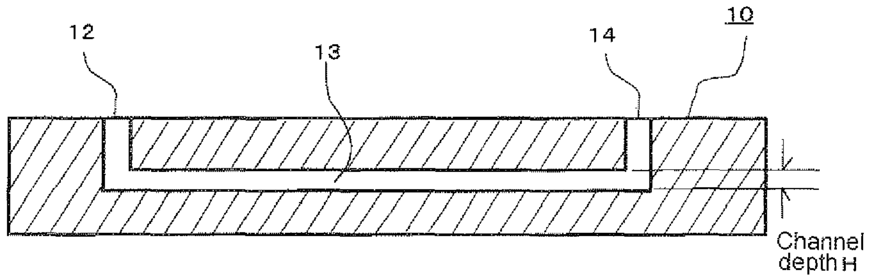


## Fig. 2

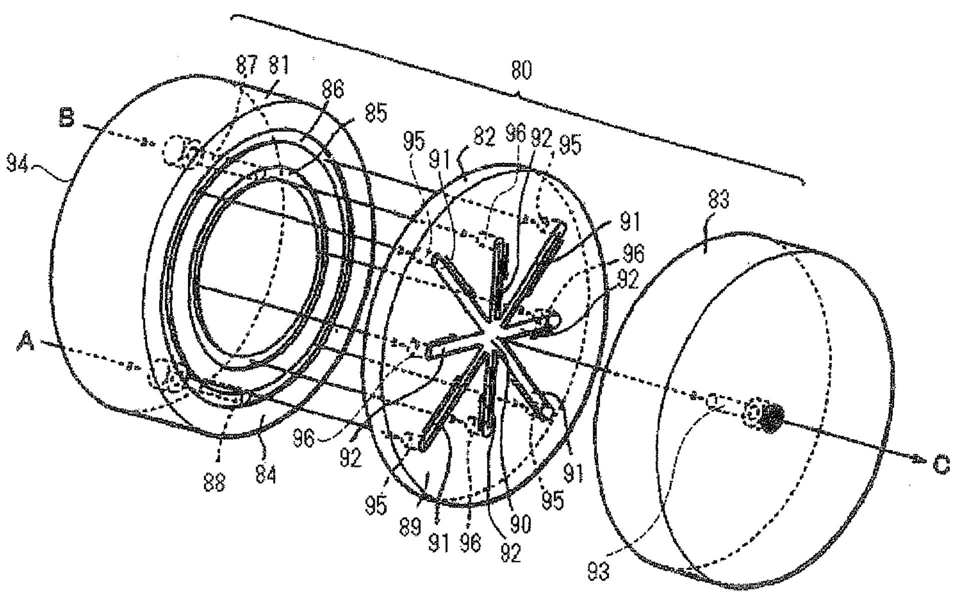

**INTERNATIONAL SEARCH REPORT**

International application No.
PCT/JP2007/071334

A. CLASSIFICATION OF SUBJECT MATTER
*C09D201/00*(2006.01)i, *C09B67/10*(2006.01)i, *C09B67/20*(2006.01)i, *C09B67/46*(2006.01)i, *C09D4/00*(2006.01)i, *C09D5/02*(2006.01)i, *C09D5/29*(2006.01)i, *C09D7/12*(2006.01)i, *C09D167/00*(2006.01)i

According to International Patent Classification (IPC) or to both national classification and IPC

B. FIELDS SEARCHED

Minimum documentation searched (classification system followed by classification symbols)
C09D201/00, C09B67/10, C09B67/20, C09B67/46, C09D4/00, C09D5/02, C09D5/29, C09D7/12, C09D167/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2006-193681 A (Dainippon Ink And Chemicals, Inc.),<br>27 July, 2006 (27.07.06),<br>Claims 1 to 4; Par. No. [0023]; examples 1 to 7<br>(Family: none) | 1,6,8-13<br>2-5,7 |
| X<br>A | JP 2002-146224 A (Dainippon Ink And Chemicals, Inc.),<br>22 May, 2002 (22.05.02),<br>Claims 1 to 9; Par. Nos. [0001], [0002], [0021], [0025]; examples 1 to 3<br>(Family: none) | 1,6,8-13<br>2-5,7 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 28 December, 2007 (28.12.07) | 15 January, 2008 (15.01.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.
PCT/JP2007/071334

C (Continuation). DOCUMENTS CONSIDERED TO BE RELEVANT

| Category* | Citation of document, with indication, where appropriate, of the relevant passages | Relevant to claim No. |
|---|---|---|
| X<br>A | JP 2001-081350 A (Ciba Specialty Chemicals Holding Inc.),<br>27 March, 2001 (27.03.01),<br>Claims 1 to 24; Par. Nos. [0002], [0026]; example 1<br>(Family: none) | 1,2,4,6,8-13<br>3,5,7 |
| X<br>A | JP 61-241365 A (Dainichiseika Color & Chemicals Mfg. Co., Ltd.),<br>27 October, 1986 (27.10.86),<br>Claims (1)-(3); page 3, upper right column, line 18 to lower right column, line 4<br>(Family: none) | 1,2,4,8-13<br>3,5-7 |
| X<br>A | JP 61-185568 A (Toyo Soda Manufacturing Co., Ltd.),<br>19 August, 1986 (19.08.86),<br>Claims (1)-(8); examples 1 to 13<br>(Family: none) | 1,2,4,8-13<br>3,5-7 |
| X<br>A | JP 2005-046652 A (Fuji Photo Film Co., Ltd.),<br>24 February, 2005 (24.02.05),<br>Claims 1 to 8; Par. Nos. [0035], [0045]; examples<br>& EP 1481725 A1 & US 2005/0031507 A1 | 1,8-13<br>2-7 |
| X<br>A | JP 2003-524033 A (Clariant International Ltd.),<br>12 August, 2003 (12.08.03),<br>Claims 1 to 13; Par. Nos. [0036], [0052], [0056], [0057]<br>& WO 2001/059013 A1 & EP 1257602 A1<br>& US 2001/0029294 A1 & US 2003/0083410 A1 | 1,8-13<br>2-7 |
| X<br>A | JP 2002-030230 A (Clariant International Ltd.),<br>31 January, 2002 (31.01.02),<br>Claims 1 to 10; Par. Nos. [0002], [0043], [0051], [0052], [0054], [0055]<br>& EP 1167461 A2 & US 2002/0014179 A1<br>& US 2003/0164118 A1 | 1,8-13<br>2-7 |
| A | JP 2006-263538 A (Fuji Photo Film Co., Ltd.),<br>05 October, 2006 (05.10.06),<br>Claims 1 to 8<br>(Family: none) | 1-13 |
| A | JP 2005-307154 A (Fuji Photo Film Co., Ltd.),<br>04 November, 2005 (04.11.05),<br>Claims 1 to 15<br>(Family: none) | 1-13 |
| A | JP 2003-026972 A (Fuji Photo Film Co., Ltd.),<br>29 January, 2003 (29.01.03),<br>Claims 1 to 8<br>(Family: none) | 1-13 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2038267 B
- WO 9747396 A
- JP 2002086057 A
- JP 2003082290 A
- JP 10296177 A
- JP 2003026972 A
- JP 2004091560 A
- JP 2005307154 A
- JP 2006263538 A
- JP 2006131695 A
- JP 2006176618 A
- JP 5076822 A
- JP 2001221690 A
- JP 2006095522 A
- JP 2006299042 A


### Non-patent literature cited in the description


- Leading-edge technology of Fine Particle/Powder. Fine particle Design using Reaction Emulsifier. CMC, 2000, 23-31